# EUROPEAN PATENT APPLICATION

(11) **EP 4 474 152 A1**
(43) Date of publication of application: **11.12.2024**
(21) Application number: 23747129.7
(22) Date of filing: 30.01.2023
(51) Int. Cl.: B32B 27/32, B32B 27/18, B65D 65/40

(54) **HYGROSCOPIC FILM AND HYGROSCOPIC LAMINATE**

(30) Priority: 31.01.2022 JP 2022012838; 31.01.2022 JP 2022012839; 25.01.2023 JP 2023009243; 25.01.2023 JP 2023009244
(71) Applicant: Dai Nippon Printing Co., Ltd., Tokyo 162-8001 (JP)
(72) Inventor: TADOKORO Tatsuro, Tokyo 162-8001 (JP); NAKADA Kiyoshi, Tokyo 162-8001 (JP); TAKEUCHI Naoya, Tokyo 162-8001 (JP); YONEMOTO Tomohiro, Tokyo 162-8001 (JP); SUZUKI Yoshihiko, Tokyo 162-8001 (JP)
(74) Representative: Müller-Boré & Partner Patentanwälte PartG mbB
(86) International application number: PCT/JP2023/002775
(87) International publication number: WO 2023/145919

(57) **Abstract**

The present invention addresses the problem of providing a hygroscopic film and a hygroscopic laminate which absorb a large amount of moisture quickly in order to suppress deterioration of contents caused by moisture absorption. A hygroscopic film comprising, in a laminated manner, at least a resin layer that contains a specific polyethylene resin and a moisture absorption layer that contains a specific polyethylene resin and a moisture absorbing agent, or a hygroscopic laminate comprising a moisture-absorbing sealant layer that contains a gas barrier base layer and a moisture absorbing agent, wherein a second resin layer comprising a specific polyethylene resin and a antistatic agent is laminated in the following order: resin layer, moisture absorption layer, and second resin layer.

## Description

### Technical field

The present invention relates to a hygroscopic film and a hygroscopic laminate having an excellent balance between moisture absorbability and heat sealability to suppress deterioration of contents caused by moisture absorption.

### Background Art

Conventionally, a resin is kneaded with a moisture absorbing agent, an anti-blocking agent, and an antistatic agent and formed into a film when imparting moisture absorbability, anti-blocking properties, and antistatic properties to a resin film, but this method is not practical because the antistatic agent likely bleeds out, thus severely contaminating manufacturing equipment and product surfaces.

While a method is disclosed for suppressing the antistatic agent from bleeding out by allowing the antistatic agent to be contained not in the outermost layer but only in the intermediate layer (see Cited Document 1), the antistatic effect is likely insufficient, thus deteriorating the balance between the antistatic effect and moisture absorbability.

### Citation List

### Patent Literature

Patent Literature 1: Japanese Patent Laid-Open No. 2008-23862

### Summary of Invention

### Technical Problem

An object of the present invention is to provide a hygroscopic film having an excellent balance between moisture absorbability for quickly absorbing a large amount of moisture to suppress deterioration of contents caused by moisture absorption and heat sealability, also a hygroscopic film having excellent antistatic properties (static electricity preventing properties, electrification preventing properties), a hygroscopic packaging material produced with the hygroscopic film, and moreover a hygroscopic laminate.

Another object of the present invention is to provide a hygroscopic laminate having an excellent balance between moisture absorbability for quickly absorbing a large amount of moisture to suppress deterioration of contents caused by moisture absorption and heat sealability, also a hygroscopic laminate having excellent antistatic properties (static electricity preventing properties, electrification preventing properties), and a hygroscopic packaging material produced with the hygroscopic laminate.

### Solution to Problem

As a result of having conducted diligent research, the present inventors found that a hygroscopic film and a hygroscopic laminate having, in a laminated manner, at least a first resin layer containing a specific polyethylene resin and a moisture absorption layer containing a specific polyethylene resin and a moisture absorbing agent can achieve the objects described above.

That is to say, the present invention is characterized by the following points:
1. A hygroscopic film comprising at least a resin layer and a moisture absorption layer in a laminated manner, wherein
   the resin layer comprises a polyethylene resin,
   the moisture absorption layer comprises a moisture absorbing agent and a polyethylene resin having a density of 0.880 g/cm³ or more and 0.930 g/cm³ or less,
   the polyethylene resin contained in the resin layer and the polyethylene resin contained in the moisture absorption layer are the same or different,
   a content of the polyethylene resin in the moisture absorption layer is 30% by mass or more and 90% by mass or less, and
   a content of the moisture absorbing agent in the moisture absorption layer is 10% by mass or more and 60% by mass or less.
2. The hygroscopic film according to 1, wherein the polyethylene resin contained in the resin layer and the polyethylene resin contained in the moisture absorption layer are the same or different linear polyethylene copolymers of ethylene and α-olefin.
3. The hygroscopic film according to 1 or 2, wherein
   the moisture absorbing agent comprises metal oxide, and
   the metal oxide is one or more selected from the group consisting of calcium oxide, magnesium oxide, and hydrophilic zeolite.
4. The hygroscopic film according to any one of 1 to 3, wherein the moisture absorption layer comprises a first moisture absorption layer and a second moisture absorption layer.
5. The hygroscopic film according to any one of 1 to 4, further comprising a second resin layer, and comprising in a laminated manner the resin layer, the moisture absorption layer, and the second resin layer in this order, wherein
   the second resin layer comprises a polyethylene resin having a density of 0.880 g/cm³ or more and 0.930 g/cm³ or less,
   the polyethylene resin contained in the resin layer, the polyethylene resin contained in the moisture absorption layer, and the polyethylene resin contained in the second resin layer are the same or different, and
   a content of the polyethylene resin in the second resin layer is 60% by mass or more and 95% by mass or less.
6. The hygroscopic film according to 5, wherein
   the second resin layer further comprises a polymer antistatic agent, and
   a resin composition constituting the second resin layer has a melt flow rate of 2.8 g/10 min or more and 10 g/10 min or less.
7. The hygroscopic film according to 5 or 6, wherein the moisture absorption layer further comprises a polymer antistatic agent.
8. The hygroscopic film according to any one of 5 to 7, wherein the polymer antistatic agent comprises:
   an ionomer comprising an ethylene-unsaturated carboxylic acid copolymer, and
   an aliphatic polyhydric alcohol having three or more hydroxyl groups within a molecule.
9. The hygroscopic film according to any one of 5 to 7, wherein the polymer antistatic agent has a main skeleton comprising a polyether skeleton, a polypropylene skeleton, and a polyamide skeleton.
10. The hygroscopic film according to any one of 5 to 9, wherein
   a molded article composed solely of the polymer antistatic agent has an intrinsic surface resistivity of 1×10⁸ to 1×10¹² Ω/□; and
   when 100 g of ultrapure water is introduced into a pouch produced by folding a 10 cm × 20 cm piece of the hygroscopic film in half and heat-sealing three sides, then extraction treatment is carried out in one atmosphere at 30°C for 20 minutes to give an extract, and the extract is analyzed for ionic impurities:
      a total content of Li⁺, Na⁺, K⁺, Mg²⁺, and Ca²⁺ in the hygroscopic film is 100 ppb or less, and
      a total content of F⁻, Cl⁻, NO₂⁻, Br⁻, NO₃⁻, SO₄²⁻, and PO₄²⁻ in the hygroscopic film is 100 ppb or less.
11. The hygroscopic film according to any one of 5 to 10, wherein the polyethylene resin contained in the resin layer and the polyethylene resin contained in the moisture absorption layer are the same or different linear polyethylene copolymers of ethylene and α-olefin.
12. The hygroscopic film according to any one of 5 to 11, wherein
   the second resin layer has a thickness of 5 µm or more and 20 µm or less, and
   a proportion of the thickness of the second resin layer to the total thickness of the hygroscopic film is 5% or more and 50% or less.
13. A hygroscopic packaging material, which is produced from the hygroscopic film according to any one of 1 to 12.
14. A hygroscopic laminate comprising at least a gas barrier base layer and a moisture-absorbing sealant layer, wherein
   the gas barrier base layer comprises at least a basal layer and a gas barrier layer,
   the basal layer comprises a resin film,
   the gas barrier layer comprises a foil comprising an inorganic compound or a vapor-deposited film comprising an inorganic compound,
   the moisture-absorbing sealant layer comprises a resin layer and a moisture absorption layer,
   the resin layer comprises a polyethylene resin,
   the moisture absorption layer comprises a moisture absorbing agent and a polyethylene resin having a density of 0.880 g/cm³ or more and 0.930 g/cm³ or less,
   the polyethylene resin contained in the resin layer and the polyethylene resin contained in the moisture absorption layer are the same or different,
   a content of the polyethylene resin in the moisture absorption layer is 30% by mass or more and 90% by mass or less, and
   a content of the moisture absorbing agent in the moisture absorption layer is 10% by mass or more and 60% by mass or less.
15. The hygroscopic laminate according to 14, wherein the basal layer comprises a polyester film.
16. The hygroscopic laminate according to 14 or 15, wherein the basal layer comprising an antistatic polyester film is disposed on a surface of the hygroscopic laminate.
17. The hygroscopic laminate according to any one of 14 to 16, wherein the moisture-absorbing sealant layer is a layer comprising a hygroscopic film.
18. The hygroscopic laminate according to any one of 14 to 17, wherein the polyethylene resin contained in the resin layer and the polyethylene resin contained in the moisture absorption layer are the same or different linear polyethylene copolymers of ethylene and α-olefin.
19. The hygroscopic laminate according to any one of 14 to 18, wherein
   the moisture absorbing agent comprises metal oxide, and
   the metal oxide is one or more selected from the group consisting of calcium oxide, magnesium oxide, and hydrophilic zeolite.
20. The hygroscopic laminate according to any one of 14 to 19, wherein the moisture absorption layer comprises a first moisture absorption layer and a second moisture absorption layer.
21. The hygroscopic laminate according to any one of 14 to 20, further comprising a second resin layer, and comprising in a laminated manner the resin layer, the moisture absorption layer, and the second resin layer in this order, wherein
   the second resin layer comprises a polyethylene resin having a density of 0.880 g/cm³ or more and 0.930 g/cm³ or less,
   the polyethylene resin contained in the resin layer, the polyethylene resin contained in the moisture absorption layer, and the polyethylene resin contained in the second resin layer are the same or different, and
   a content of the polyethylene resin in the second resin layer is 60% by mass or more and 95% by mass or less.
22. The hygroscopic laminate according to 21, wherein
   the second resin layer further comprises a polymer antistatic agent, and
   a resin composition constituting the second resin layer has a melt flow rate of 2.8 g/10 min or more and 10 g/10 min or less.
23. The hygroscopic laminate according to 21 or 22, wherein the moisture absorption layer further comprises a polymer antistatic agent.
24. The hygroscopic laminate according to any one of 21 to 23, wherein the polymer antistatic agent comprises:
   an ionomer comprising an ethylene-unsaturated carboxylic acid copolymer, and
   an aliphatic polyhydric alcohol having three or more hydroxyl groups within a molecule.
25. The hygroscopic laminate according to any one of 21 to 23, wherein the polymer antistatic agent has a main skeleton comprising a polyether skeleton, a polypropylene skeleton, and a polyamide skeleton.
26. The hygroscopic laminate according to any one of 21 to 25, wherein
   a molded article composed solely of the polymer antistatic agent has an intrinsic surface resistivity of 1×10⁸ to 1×10¹² Ω/□; and
   when 100 g of ultrapure water is introduced into a pouch produced by folding a 10 cm × 20 cm piece of the hygroscopic film in half and heat-sealing three sides, then extraction treatment is carried out in one atmosphere at 30°C for 20 minutes to give an extract, and the extract is analyzed for ionic impurities:
      a total content of Li⁺, Na⁺, K⁺, Mg²⁺, and Ca²⁺ in the hygroscopic film is 100 ppb or less, and
      a total content of F⁻, Cl⁻, NO₂⁻, Br⁻, NO₃⁻, SO₄²⁻, and PO₄²⁻ in the hygroscopic film is 100 ppb or less.
27. The hygroscopic laminate according to any one of 21 to 26, wherein the polyethylene resin contained in the resin layer and the polyethylene resin contained in the moisture absorption layer are the same or different linear polyethylene copolymers of ethylene and α-olefin.
28. The hygroscopic laminate according to any one of 21 to 27, wherein
   the second resin layer has a thickness of 5 µm or more and 20 µm or less, and
   a proportion of the thickness of the second resin layer to the total thickness of the moisture-absorbing sealant layer is 5% or more and 50% or less.
29. A hygroscopic packaging material, which is produced from the hygroscopic laminate according to any one of 14 to 28.
30. A hygroscopic package, which is produced from the hygroscopic packaging material according to 29.

### Advantageous Effects of Invention

The present invention can provide a hygroscopic film having an excellent balance between moisture absorbability for quickly absorbing a large amount of moisture to suppress deterioration of contents caused by moisture absorption and heat sealability, also a hygroscopic film having excellent antistatic properties (static electricity preventing properties, electrification preventing properties), and a hygroscopic packaging material produced with the hygroscopic film.

Also, the present invention can provide a hygroscopic laminate having an excellent balance between moisture absorbability for quickly absorbing a large amount of moisture to suppress deterioration of contents caused by moisture absorption and heat sealability, also a hygroscopic laminate having excellent antistatic properties (static electricity preventing properties, electrification preventing properties), and a hygroscopic packaging material produced with the hygroscopic laminate.

### Brief Description of Drawings

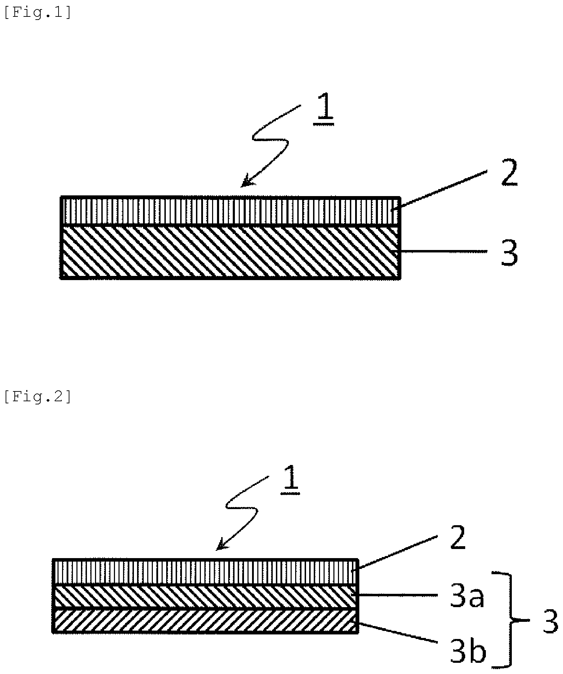

[Figure 1] Figure 1 is a schematic cross-sectional view showing an exemplary layer structure of the hygroscopic film of the present invention.
[Figure 2] Figure 2 is a schematic cross-sectional view showing another exemplary layer structure of the hygroscopic film of the present invention.

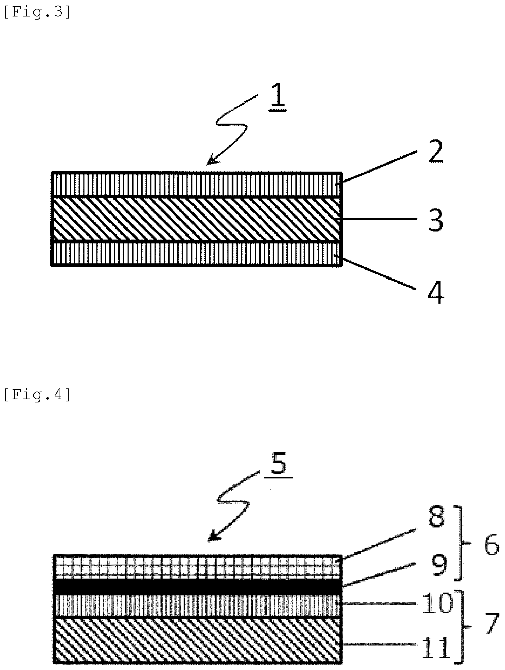

[Figure 3] Figure 3 is a schematic cross-sectional view showing yet another exemplary layer structure of the hygroscopic film of the present invention.
[Figure 4] Figure 4 is a schematic cross-sectional view showing an exemplary layer structure of the hygroscopic laminate of the present invention.

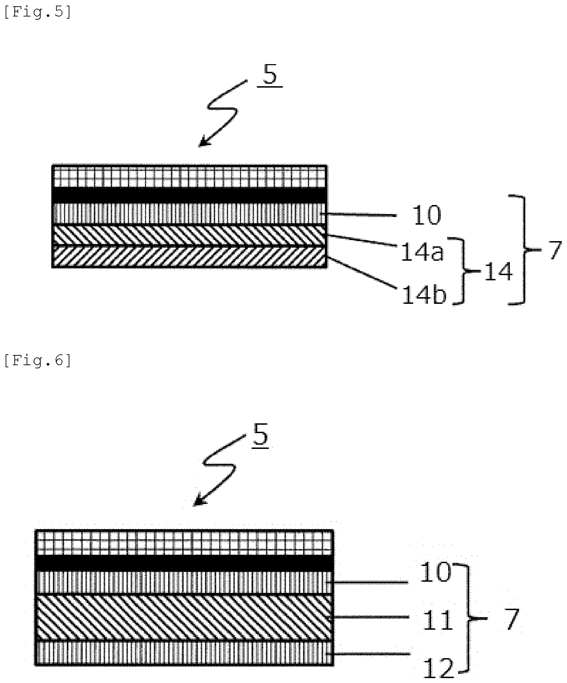

[Figure 5] Figure 5 is a schematic cross-sectional view showing another exemplary layer structure of the hygroscopic laminate of the present invention.
[Figure 6] Figure 6 is a schematic cross-sectional view showing yet another exemplary layer structure of the hygroscopic laminate of the present invention.

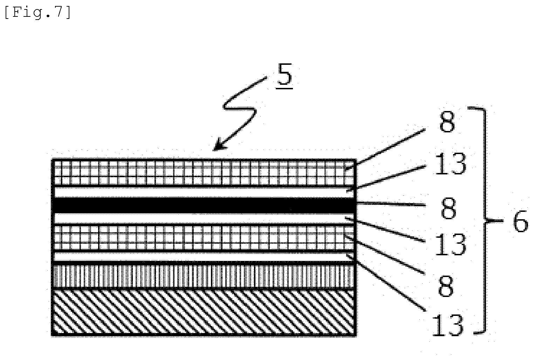

[Figure 7] Figure 7 is a schematic cross-sectional view showing yet further another exemplary layer structure of the hygroscopic laminate of the present invention.

In the drawings, the size and proportion of the components may be altered, or emphasized, for ease of understanding. For visibility, portions not needed to be described or repetition of reference characters may be omitted.

Although not shown in the drawings, an adhesive layer may be provided between the layers.

Moreover, to enhance adhesion (adhesive strength) between the layers, the lamination surface of each layer may receive in advance a physical surface treatment such as corona discharge treatment, ozone treatment, plasma treatment, glow discharge treatment, or sandblasting treatment, or a chemical surface treatment such as oxidation treatment with a chemical, as necessary.

### Description of Embodiments

The hygroscopic film, the packaging material produced with the hygroscopic film, the hygroscopic laminate, and the packaging material produced with the hygroscopic laminate of the present invention will now be described in more detail, but the present invention is not limited thereto.

Herein, film and sheet are synonymous.

### <<Hygroscopic film>>

The hygroscopic film of the present invention has a layer structure having at least a resin layer and a moisture absorption layer in a laminated manner and is capable of quickly absorbing a large amount of moisture.

The resin layer is a layer containing a polyethylene resin and not containing a moisture absorbing agent.

The moisture absorption layer is a layer containing a moisture absorbing agent and a polyethylene resin and having excellent moisture absorbability.

The hygroscopic film may further have a second resin layer and have a layer structure in which the aforementioned resin layer (hereinafter referred to as the first resin layer), the moisture absorption layer, and the second resin layer are laminated in this order.

The second resin layer is a layer containing a polyethylene resin, not containing a moisture absorbing agent, and having excellent heat sealability.

While a polyethylene resin is contained in each of the first resin layer, the moisture absorption layer, and the second resin layer of the present invention, the polyethylene resin contained in each layer may be the same or different.

The lower the density of the polyethylene resin is, and the thinner the second resin layer is, the faster the hygroscopic film can absorb moisture.

In the hygroscopic film, to enhance anti-blocking properties, the first resin layer, the moisture absorption layer, or the second resin layer when constituting the surface layer of the hygroscopic film may contain an anti-blocking agent.

The hygroscopic film may further contain an antistatic agent in the outermost first resin layer or the outermost second resin layer to enhance antistatic properties (static electricity preventing properties, electrification preventing properties).

Here, the antistatic agent is preferably not contained in a layer that contains a moisture absorbing agent. When the antistatic agent is contained in a layer containing a moisture absorbing agent, there is a tendency that high antistatic properties are unlikely obtained.

However, when the antistatic agent is a polymer antistatic agent, sufficient antistatic properties can be obtained even when the moisture absorption layer contains the antistatic agent.

The hygroscopic film may further contain small amounts of a slipping agent, an antioxidant, a solvent, and other additives in addition to those described above.

As for the moisture absorbability of the hygroscopic film of the present invention, the amount of moisture absorbed in 24 hours in an environment of 23°C and 50% RH is preferably 1.0 g/m² or more and 6.0 g/m² or less, and more preferably 2.0 g/m² or more and 4.0 g/m² or less.

The amount of moisture absorbed in 48 hours is preferably 2.0 g/m² or more and 8.0 g/m² or less, and more preferably 4.0 g/m² or more and 6.0 g/m² or less.

When the amount of moisture absorbed in 24 hours or 48 hours is less than the above moisture absorbability (the amount of moisture absorbed, the rate of moisture absorbed), the moisture absorbing effect may be insufficient for contents that deteriorate with even a small amount of moisture absorbed. Also, when the amount of moisture absorbed is larger than the above range, the rate of moisture absorbed is excessively high, possibly resulting in poor workability.

The amount of moisture absorbed in two weeks is preferably 2.5 g/m² or more and 20.0 g/m² or less, and more preferably 3.0 g/m² or more and 15.0 g/m² or less.

When the amount of moisture absorbed in two weeks is less than the above moisture absorbability, the moisture absorbing effect may be insufficient. Also, an amount of moisture absorbed larger than the above range possibly results in excessive moisture absorption and increased costs.

The hygroscopic film may further have a layer other than the first resin layer, the moisture absorption layer, and the second resin layer as necessary.

For example, the hygroscopic film of the present invention may be laminated by interposing adhesive layers between the aforementioned layers constituting the film and between the sub-layers of each layer.

Also, an anchor coat layer may be provided at the interface between the adhesive layer and the aforementioned layers to improve adhesion.

The intrinsic surface resistance of the outermost second resin layer containing an antistatic agent of the hygroscopic film is preferably 1.0x10⁷ Ω/□ or more and less than 1.0×10¹² Ω/□, and more preferably 1.0×10⁸ Ω/□ or more and less than 1.0×10¹¹ Ω/□.

Even when no antistatic agent is contained in the outermost layer, the intrinsic surface resistance of the hygroscopic film is preferably 1.0x10⁷ Ω/□ or more and less than 1.0×10¹⁴ Ω/□.

An intrinsic surface resistance lower than the above range likely results in poor sealability and extremely high costs, and an intrinsic surface resistance higher than the above range likely results in insufficient antistatic properties.

Depending on the application of the hygroscopic film, e.g., when the hygroscopic film is used as a packaging material for semiconductor wafers, the elutable ion content is preferably small to suppress the contents of the package from being contaminated by ions.

The elutable ion content in the hygroscopic film can be measured by, for example, carrying out an extraction treatment using a 10 cm × 20 cm hygroscopic film and 100 g of ultrapure water in one atmosphere at 30°C for 20 minutes to give an extract, and then analyzing the extract.

The total content of five extracted elutable cations Li⁺, Na⁺, K⁺, Mg²⁺, and Ca²⁺ in the hygroscopic film is preferably 100 ppb or less, and more preferably 50 ppb or less.

The total content of seven extracted elutable anions F-, Cl-, NO₂⁻, Br-, NO₃⁻, SO₄²⁻, and PO₄²⁻ in the hygroscopic film is preferably 100 ppb or less, and more preferably 50 ppb or less.

Even when the total content of the aforementioned five elutable cations is greater than 100 ppb, the hygroscopic film may be sufficiently usable depending on the application as long as the Na⁺ content and the K⁺ content is each 100 ppb or less.

Moreover, even when at least one of the Na⁺ content and the K⁺ content is greater than 100 ppb, the hygroscopic film may be sufficiently usable depending on the application.

Also, even when the total content of the aforementioned seven elutable anions is greater than 100 ppb, the hygroscopic film may be sufficiently usable depending on the application as long as the Cl⁻ content and the Br⁻ content is each 100 ppb or less.

Moreover, even when at least one of the Cl⁻ content and the Br⁻ content is greater than 100 ppb, the hygroscopic film may be sufficiently usable depending on the application.

Also, the electrical conductivity of the extract obtained above is preferably 50 µS/m or less, and more preferably 40 µS/m or less.

The content of elutable cations and elutable anions extracted is most preferably 0 ppb, and the electrical conductivity of the extract is most preferably 0 S/cm or less, but it is difficult to attain such a content and such an electrical conductivity because of the impurities contained in materials and contamination during the course of manufacturing process.

The thickness of the hygroscopic film is preferably 20 µm or more and 200 µm or less, more preferably 30 µm or more and 150 µm or less, and even more preferably 50 µm or more and 120 µm or less to strike a good balance between moisture absorbability, rigidity, heat sealability, and antistatic properties. A thickness smaller than the above range may result in insufficient heat sealability, moisture absorbability, and antistatic properties, and a thickness larger than the above range may result in excessive rigidity and thus poor workability, a long time for heat sealing, increased costs, and poor moisture absorbability depending on the thick layer structure.

### <<Layers of hygroscopic film>>

### <First resin layer>

The first resin layer is a layer containing a polyethylene resin, and may be composed of one layer or two or more layers.

The polyethylene resin contained in the first resin, while the density is not particularly limited, is preferably a polyethylene resin having excellent heat sealability. Also, the polyethylene resin contained in the moisture absorption layer or the second resin layer may be used as well.

The first resin layer may further contain other resins or various additives to such an extent that the heat sealability is not significantly impaired.

The outermost first resin layer may further contain an anti-blocking agent to increase the blocking resistance of the hygroscopic film.

The content of the anti-blocking agent in the first resin layer is preferably 0.1% by mass or more and 5.0% by mass or less, and more preferably 0.5% by mass or more and 2.0% by mass or less.

A content smaller than the above range may not provide sufficient blocking resistance, and a content larger than the above range does not increase blocking resistance so much.

The thickness of the first resin layer is preferably 3 µm or more and 40 µm or less, more preferably 5 µm or more and 30 µm or less, and even more preferably 8 µm or more and 20 µm or less to strike a good balance between moisture absorbability, heat sealability, and rigidity. A thickness smaller than the above range may result in insufficient adhesion and heat sealability, and a thickness larger than the above range may result in excessive rigidity.

### <Moisture absorption layer>

The moisture absorption layer is a layer that contains a moisture absorbing agent and a polyethylene resin, and having excellent moisture absorbability. The polyethylene resin also functions as a binder resin that disperses the moisture absorbing agent.

The moisture absorption layer may further contain a polymer antistatic agent.

Also, the moisture absorption layer may contain other resins or various additives to such an extent that the moisture absorbability is not significantly impaired.

The moisture absorption layer may be composed of one layer or two or more layers, and when the moisture absorption layer is composed of two or more layers, the polyethylene resin and the moisture absorbing agent contained in each moisture absorption layer may be the same or different, and the content may be the same or different.

The polyethylene resin contained in the moisture absorption layer preferably has a density of 0.880 g/cm³ or more and 0.930 g/cm³ or less.

A density smaller than the above range may likely result in poor processability of the hygroscopic film, and a density larger than the above range may not provide sufficient moisture absorbability.

The content of the polyethylene resin having a density of 0.880 g/cm³ or more and 0.930 g/cm³ or less in the moisture absorption layer is preferably 40% by mass or more and 90% by mass or less, and more preferably 50% by mass or more and 70% by mass or less.

A content smaller than the above range may not provide sufficient film strength, and a content larger than the above range may result in that a sufficient amount of the moisture absorbing agent cannot be contained.

The content of the moisture absorbing agent in a layer containing the moisture absorbing agent is preferably 10% by mass or more and 60% by mass or less, and more preferably 30% by mass or more and 50% by mass or less. When a content is smaller than the above range, a sufficient moisture absorbing effect may be unlikely provided, and a content larger than the above range may result in impaired film formability, impaired adhesion to other layers, and impaired heat seal strength.

To exhibit good moisture absorbability, the thickness of the moisture absorption layer is preferably 5 µm or more and 55 µm or less, more preferably 10 µm or more and 50 µm or less, and even more preferably 20 µm or more and 45 µm or less. A thickness smaller than the above range may result in insufficient moisture absorbability, and a thickness larger than the above range may result in excessive moisture absorbability and poor economy.

### <Second resin layer>

The second resin layer is a layer containing an antistatic agent and a polyethylene resin, not containing a moisture absorbing agent, and having excellent heat sealability, and may be composed of one layer or two or more layers.

Also, the second resin layer may contain other resins or various additives to such an extent that moisture absorbability, heat sealability, antistatic properties, and the like are not significantly impaired.

The content of the antistatic agent in the second resin layer is preferably 5.0% by mass or more and 25.0% by mass or less, and more preferably 10.0% by mass or more and 20.0% by mass or less.

A content smaller than the above range may not provide sufficient antistatic properties, and a content larger than the above range may result in poor film formability and sealability.

When the antistatic agent contained in the second resin layer is a polymer antistatic agent, compatibility between the polymer antistatic agent and the polyethylene resin may be poor, large phase separation such as a sea-island structure may be created, and heat seal strength may be impaired.

In such a case, the melt flow rate of the resin composition constituting the second resin layer is preferably regulated to thereby increase the uniformity of the resin composition and suppress phase separation, and the melt flow rate is preferably 2.8 g/10 min or more and 10 g/10 min or less.

Also, to suppress phase separation, a compatibilizer may be added to make the polymer antistatic agent and the polyethylene resin compatible.

Examples of such compatibilizers include modified polyolefins such as modified polyethylene and modified polypropylene having various functional groups. A specific example may be Admer (modified polyolefin) of Mitsui Chemicals, Inc.

The polyethylene resin contained in the second resin layer is preferably a polyethylene resin having a density of 0.880 g/cm³ or more and 0.930 g/cm³ or less.

A density smaller than the above range likely results in poor processability of the hygroscopic film and poor heat seal strength. A density larger than the above range may result in a decreased moisture absorption rate and poor heat sealability.

The content of the polyethylene resin having a density of 0.880 g/cm³ or more and 0.930 g/cm³ or less in the second resin layer is preferably 60% by mass or more and 95% by mass or less, and more preferably 70% by mass or more and 85% by mass or less.

The thickness of the second resin layer is preferably 3 µm or more and 40 µm or less, more preferably 5 µm or more and 30 µm or less, and even more preferably 8 µm or more and 20 µm or less. A thickness smaller than the above range tends to result in impaired antistatic properties, and a thickness larger than the above range likely results in a lowered moisture absorption rate.

Also, the proportion of the thickness of the second resin layer to the total thickness of the hygroscopic film is preferably 5% or more and 50% or less. A proportion lower than the above range likely results in poor film formability and impaired productivity, and a proportion higher than the above range may result in poor film formability and impaired productivity as well as impaired moisture absorbability.

### <Adhesive layer>

The adhesive (the adhesive composition) that forms the adhesive layer may be heat curable, UV curable, electron beam curable, or the like, may be in an aqueous, solution, emulsion, dispersion, or like type, may be in a film/sheet, powder, solid, or like form, and, moreover, may have any mechanism of adhesion, e.g., a chemical reaction, solvent volatilization, thermal melting, or thermal pressure type.

Examples of such adhesives include polyvinyl acetate adhesives such as polyvinyl acetate and vinyl acetate-ethylene copolymers; polyacrylic acid adhesives composed of copolymers of polyacrylic acid with polystyrene, polyester, polyvinyl acetate, or the like; cyanoacrylate adhesives; ethylene copolymer adhesives composed of copolymers of ethylene with a monomer such as vinyl acetate, ethyl acrylate, acrylic acid, or methacrylic acid; polyurethane adhesives, polyester adhesives; polyimide adhesives; polyolefin adhesives; amino resin adhesives composed of urea resin, melamine resin, or the like; phenol resin adhesives, epoxy adhesives, reactive (meth)acrylic adhesives; elastomer adhesives composed of chloroprene rubber, nitrile rubber, styrene-butadiene rubber, or the like; silicone adhesives; and inorganic adhesives composed of alkali metal silicate, low-melting glass, or the like. In particular, polyurethane adhesives are preferable.

In one embodiment of the present invention, the adhesive layer may be a layer composed of any of an adhesive for dry lamination, an adhesive for non-solvent lamination, and the like.

In another embodiment, the adhesive layer may be formed by sandwich lamination. First, a thermoplastic resin is thermally melted, expanded/stretched in the required width direction with a T-die or the like to extrude it into a curtain form, then allowed to flow down onto an adhering target layer, and sandwiched between a rubber roll and a cooled metal roll, and thereby formation of an adhesive layer as well as adhesion and lamination to the adhering target layer are simultaneously achieved. In this case, any resin that can be thermally melted and applied to an extruder can be used in the adhesive layer. Specifically, a resin set forth above as a thermoplastic resin having heat sealability can be preferably used.

When using an adhesive for dry lamination, the adhesive dispersed or dissolved in a solvent is applied to one film and dried, the other film is placed on top for lamination, then the adhesive is aged for several hours to several days at 30 to 120°C, and thereby the adhesive is cured and adhered, thus enabling lamination.

When using an adhesive for non-solvent lamination, the adhesive itself is applied to the adhering target layer without being dispersed or dissolved in a solvent and then dried, a film for forming the other layer is then placed on top for lamination, the adhesive is then aged for several hours to several days at 30 to 120°C, and thereby the adhesive is cured for lamination.

The adhesive for dry lamination or the adhesive for non-solvent lamination can be used by way of coating such as roll coating, gravure roll coating, or kiss coating, and the amount of the adhesive coated is preferably 0.1 to 10 g/m² (in a dry state). An amount of the adhesive coated within the above range results in good adhesion.

### <Anchor coat layer>

The anchor coat layer can be formed from any anchor coating agent.

Examples of usable anchor coating agents include organotitanium, isocyanate (urethane), polyethyleneimine, acid-modified polyethylene, polybutadiene, polyacrylic, polyester, epoxy, polyvinyl acetate, and other anchor coating agents.

### <<Hygroscopic packaging material>>

The hygroscopic packaging material of the present invention is a packaging material produced from the hygroscopic film of the present invention, and examples include hygroscopic packaging materials for packaging food products and industrial materials.

Examples of food products include cooked or frozen food, grains, confections, articles of personal preference, and seasonings, and the food products when accommodated therein may be in their original form, processed form, powdery/granular form (powder), tablet form, or the like.

Specific examples of industrial materials include drugs (quasi-drugs), amenities, electronic materials/components, electric/electronic products, and mechanical parts.

Examples of drugs (quasi-drugs) include pesticides, insect repellents, insecticides, poultice, toothpaste, and tablets.

Examples of amenities include air fresheners, fragrances, bath additives, cosmetics, toiletry products, surfactants, shampoos, rinses, deodorants, and detergents.

Examples of electronic materials/components and electric/electronic products include semiconductor silicon wafers, batteries, solar cells, semiconductor packages, discrete components such as organic light-emitting diodes, wavelength conversion sheets, and display devices.

Specific examples of mechanical parts include screws, shafts, metal plates, and the like for use in vehicles.

### <<Hygroscopic package>>

The hygroscopic package of the present invention is a package produced by forming the hygroscopic packaging material of the present invention into a pouch.

Specific examples of the hygroscopic package of the present invention include pillow pouches and gazette pouches produced by folding the hygroscopic packaging material of the present invention or placing two pieces of the hygroscopic packaging material one on top of the other such that the heat-sealing surfaces of the hygroscopic packaging material face each other, and heat-sealing the circumferential edges, for example, in a side seal type, two-side seal type, three-side seal type, four-side seal type, envelope seal type, center seal type (pillow seal type), pleated seal type, flat-bottom seal type, square-bottom seal type, gazette seal type, or like heat seal form.

### <<Components>>

### [Polyethylene resin]

The polyethylene resin contained in each of the first resin layer, the moisture absorption layer, and the second resin layer is preferably a polyethylene resin having a density of 0.880 g/cm³ or more and 0.930 g/cm³ or less, and is preferably a linear polyethylene copolymer of ethylene and an α-olefin.

Specific examples of α-olefin include 1-butene, 1-hexene, 4-methyl-1-pentene, and 1-octene, and one of or two or more of these may be used.

A linear polyethylene copolymer of ethylene and α-olefin has a molecular structure in which a side chain derived from 1-butene, 1-hexene, 4-methyl-1-pentene, or 1-octene is present on the polyethylene main chain derived from ethylene.

In particular, a linear polyethylene copolymer of ethylene and 1-hexene is preferable.

While linear low density polyethylene (L-LDPE) is defined in JIS K6899-1: 2000 as a linear polyethylene copolymer having a density of 0.910 to 0.925, this classification by density is not applicable herein to the linear polyethylene copolymer of ethylene and α-olefin having a density of 0.880 g/cm³ or more and 0.930 g/cm³ or less.

The density of the polyethylene resin contained in a resin film can be verified by measuring the melting point of a polyethylene resin film by DSC analysis and comparing it with the similarly measured melting point of a LLDPE film of known density.

The melt flow rate (MFR) of the polyethylene resin is preferably 1 g/10 min or more and 10 g/10 min or less, and more preferably 1.5 g/10 min or more and 7 g/10 min or less. When the MFR is within the above range, the resin can maintain a good MFR and exhibit good film formability and adhesion even when mixed with another resin or a moisture absorbing agent.

In the present invention, a commonly used polyethylene resin may be contained as long as the moisture absorbability and the heat sealability of the hygroscopic film are not significantly impaired.

Specific examples of commonly used polyethylene resins include, but are not limited to, LDPE, MDPE, HDPE, LLDPE, ethylene-vinyl acetate copolymers, ethylene-ethyl acrylate copolymers, ethylene-acrylic acid copolymers, ethylene-methacrylic acid copolymers, ethylene-methacrylic acid methyl copolymers, ethylene-propylene copolymers, and mixtures of such resins.

### [Moisture absorbing agent]

The moisture absorbing agent in the present invention preferably contains a metal oxide.

One or more metal oxides selected from the group consisting of calcium oxide, magnesium oxide, and hydrophilic zeolite are preferably contained.

While the moisture absorbing agent may have any of a spherical, rod, elliptical, or like external shape and may be in any of a powder, aggregated, granular, or like form, the moisture absorbing agent preferably has a powder form from the viewpoint of uniform dispersion, kneading characteristics, film formability, and the like when dispersed in a resin.

In the present invention, while the moisture absorbing agent having an average particle size that is suitable according to the application can be selected, the average particle size is preferably 0.01 µm or more and 15 µm or less, and more preferably 1 µm or more and 12 µm or less. Here, the average particle size is a value measured by dynamic light scattering.

An average particle size smaller than the above range likely results in aggregation of the moisture absorbing agent, and dispersibility tends to be impaired. An average particle size larger than the above range tends to result in poor film formability of a layer containing the moisture absorbing agent, thus making it difficult to add a large amount of the moisture absorbing agent, moreover, the surface area is also reduced, and thus a sufficient moisture absorbing effect may not be obtained.

### (Hydrophilic zeolite)

Hydrophilic zeolite maintains its moisture absorbing effect even when exposed to a temperature of 230°C or higher, and is thus preferably usable.

Being hydrophilic, hydrophilic zeolite likely adsorbs highly polar water molecules and the like but, on the other hand, affinity for low-polarity organic gas is low, affinity for other low-polarity gas components, hydrophobic gas, and lipophilic gas (including solvent gas) is also low, and thus hydrophilic zeolite unlikely adsorbs such materials. That is to say, hydrophilic zeolite has the excellent function of not adsorbing gas components that do not have functional groups.

### (Improvement of dispersibility by forming moisture absorbing agent into masterbatch)

While the moisture absorbing agent may be directly mixed with other components of the moisture absorption layer and melt-kneaded, the dispersibility of the moisture absorbing agent in the moisture absorption layer is preferably increased by a so-called masterbatch method in which a high concentration of the moisture absorbing agent is mixed with a thermoplastic resin and then melt-kneaded (melt-blended) to produce a masterbatch, and this is then mixed and melt-kneaded with other components of the moisture absorption layer in a proportion according to the target content.

Employing the masterbatch method enables the moisture absorbing agent to be efficiently and uniformly dispersed in the moisture absorption layer even when a moisture absorbing agent that readily aggregates is used.

The mass ratio of the moisture absorbing agent/the thermoplastic resin in the masterbatch is not particularly limited, and is preferably 20/80 or more and 60/40 or less, and more preferably 30/70 or more and 50/50 or less.

A known or conventional kneading method is applicable to a method for kneading the moisture absorbing agent and the thermoplastic resin.

The thermoplastic resin used in the masterbatch can be of a type and in a content that do not adversely affect the overall heat sealability, film formability, and moisture absorbability of the moisture absorption layer in a significant manner, and is preferably a resin that is highly compatible with other resins such as a polyethylene resin contained in the moisture absorption layer and that has comparable density and heat sealability, and may be the same as or different from such resins.

Specific examples of the thermoplastic resin used in the masterbatch include, but are not limited to, general-purpose polyolefin resins such as polyethylene, polypropylene, methylpentene polymers and acid-modified polyolefin resins, and mixtures of these resins, and a thermoplastic resin of a type that conforms to the purpose can be selected.

The melt flow rate (MFR) of the thermoplastic resin used in the masterbatch is preferably 0.2 g/10 min or more and 10 g/10 min or less. With a MFR in this range, melt-kneading with the moisture absorbing agent is easy, the moisture absorbing agent can be readily dispersed in the moisture absorption layer, and the film formability of the moisture absorption layer is likely maintained.

### [Anti-blocking agent]

The anti-blocking agent is preferably zeolite, silica (spherical), silica (acicular), talc, PMMA, or the like.

### <Antistatic agent>

The antistatic agent in the present invention preferably contains a polymer antistatic agent.

A low molecular weight antistatic agent such as a surfactant, when used in combination with a moisture absorbing agent, may lose its antistatic performance depending on the type of the moisture absorbing agent.

However, the polymer antistatic agent, even when used in combination with a moisture absorbing agent, can maintain both moisture absorbability and antistatic properties without losing its antistatic performance.

The antistatic agent used in the present invention may be any type among a cationic antistatic agent, an anionic antistatic agent, an amphoteric antistatic agent, and a nonionic antistatic agent.

The cationic antistatic agent is an antistatic agent that forms a positive ion when dissolved in water, and examples include antistatic agents containing a quaternary ammonium salt, a pyridinium salt, or a compound having a cationic group such as a primary, secondary or tertiary amino group.

The polymer cationic antistatic agent may be an antistatic agent in which a polymer compound forms a positive ion, or may be an antistatic agent obtained by adding an additive that forms a positive ion to a polymer compound.

The anionic antistatic agent is an antistatic agent that forms negative ions when dissolved in water, and examples include antistatic agents containing a compound having an anionic group such as a sulfonic acid salt group, a sulfuric acid ester group, a phosphoric acid ester salt group, or a phosphonic acid salt group.

The polymer anionic antistatic agent may be an antistatic agent in which a polymer compound forms positive ions, or may be an antistatic agent obtained by adding an additive that forms a negative ion to a polymer compound.

The amphoteric antistatic agent is an antistatic agent that, when dissolved in water, forms negative ions in the alkaline region and a positive ion in the acidic region, and examples include antistatic agents containing a compound such as an amino acid compound or an aminosulfuric acid ester.

The nonionic antistatic agent is an antistatic agent that does not ionize when dissolved in water, and examples include antistatic agents containing an amino alcohol compound, a glycerin compound, a polyethylene glycol compound, a polyether ester amide compound, an ethylene oxide-epichlorohydrin compound, or a polyether ester compound.

In the nonionic antistatic agent, for example, a polyether skeleton moiety may have antistatic properties, and a moiety composed of a polypropylene skeleton and a polyamide skeleton may enhance dispersibility in resin and strength.

In the present invention, more preferable among the polymer antistatic agents is a cationic polymer antistatic agent that contains an ionomer including an ethylene-unsaturated carboxylic acid copolymer and an aliphatic polyhydric alcohol having three or more hydroxyl groups within the molecule, or is a polymer nonionic antistatic agent having a polyether skeleton, a polypropylene skeleton, and a polyamide skeleton in the main skeleton.

The intrinsic surface resistance of a molded article composed solely of the polymer antistatic agent is preferably 1×10⁸ to 1×10¹³ Ω/□, and more preferably 1×10⁸ to 1×10¹² Ω/□. It is difficult to obtain an intrinsic surface resistivity lower than the above range, and an intrinsic surface resistivity higher than the above range may result in an insufficient effect of lowering the intrinsic surface resistivity of the hygroscopic film.

For example, when contents packaged in the hygroscopic film do not favor elutable ions, a nonionic polymer antistatic agent is preferably used, and, in particular, a nonionic polymer antistatic agent is preferably contained in the surface layer, such as the second resin layer, of the hygroscopic film.

In the present invention, the polymer antistatic agent is particularly preferably a polymer nonionic antistatic agent in which the main skeleton has a polyether skeleton, a polypropylene skeleton, and a polyamide skeleton, and the intrinsic surface resistivity of a molded article composed solely of the polymer antistatic agent is 1×10⁸ to 1×10¹² Ω/□.

However, when the moisture absorption layer is not a surface layer, e.g., when being sandwiched between the first resin layer and the second resin layer, a cationic polymer antistatic agent or an anionic polymer antistatic agent may be contained in the moisture absorption layer.

### <<Method for producing hygroscopic film>>

The method for producing the hygroscopic film provided below is one example, and the present invention is not limited thereto.

Film formation and lamination for the layers constituting the hygroscopic film are not particularly limited, and known or commonly used film formation and lamination methods are applicable. For example, any method may be used such as wet lamination, dry lamination, solventless dry lamination, extrusion lamination, T-die co-extrusion molding, co-extrusion lamination, inflation, or the like.

The resulting hygroscopic film may be subjected to secondary processing to impart, for example, surface functions such as chemical functions, electrical functions, magnetic functions, mechanical functions, friction/abrasion/lubrication functions, optical functions, thermal functions, and biocompatibility.

Examples of secondary processing include embossing, painting, bonding, printing, metallizing (such as plating), machining, and surface treatment (such as antistatic treatment, corona discharge treatment, plasma treatment, photochromism treatment, physical vapor deposition, chemical vapor deposition, and coating).

### <<Method for producing hygroscopic package>>

The hygroscopic package of the present invention can be produced by folding the hygroscopic packaging material of the present invention or placing two pieces of the hygroscopic packaging material one on top of the other such that the heat-sealing surfaces face each other, and heat-sealing the circumferential edges, for example, in a side seal type, two-side seal type, three-side seal type, four-side seal type, envelope seal type, center seal type (pillow seal type), pleated seal type, flat-bottom seal type, square-bottom seal type, gazette seal type, or like heat seal form.

Examples of the heat sealing method include bar sealing, rotary roll sealing, belt sealing, impulse sealing, high frequency sealing, and ultrasonic sealing.

Details of the method for producing a hygroscopic package containing 300 mm semiconductor silicon wafers are as follows.

First, about twenty to thirty 300 mm semiconductor silicon wafers are accommodated in a dedicated carrier case.

Next, two sheets of the hygroscopic packaging material of the present invention having about 500 mm × 500 mm are provided, the three sides of the hygroscopic packaging material are heat-sealed to a width of about 10 mm such that the heat-sealing surfaces face each other, and thus a hygroscopic packaging pouch, the only one side of which is not heat-sealed, is obtained.

The dedicated carrier case containing the semiconductor silicon wafers is then placed in the resulting hygroscopic packaging pouch, and the remaining one side is heat-sealed to a width of about 10 mm to give a filled hygroscopic package. At this time, degassed packaging may be performed as necessary.

### <<Hygroscopic laminate>>

The hygroscopic laminate of the present invention has at least a gas barrier base layer and a moisture-absorbing sealant layer containing a moisture absorbing agent.

The moisture-absorbing sealant layer contains a moisture absorbent and thus has excellent moisture absorbability, and contains a heat sealing resin and thus has excellent heat sealability.

The gas barrier base layer and the moisture-absorbing sealant layer may be laminated directly or via an adhesive layer.

The hygroscopic laminate may be laminated by interposing adhesive layers between the aforementioned layers constituting the laminate and between the sub-layers of each layer.

Also, an anchor coat layer may be provided at the interface between the adhesive layer and the aforementioned layers to improve adhesion.

The gas barrier base layer is a layer having a basal layer and a gas barrier layer.

In the gas barrier base layer, the basal layer may be a single layer, or two or more identical or different layers may be adjacent to each other or may be separated by another layer.

In the gas barrier base layer, the gas barrier layer may be a single layer, or two or more identical or different layers may be adjacent to each other or may be separated by another layer.

For example, gas barrier base layer [basal layer 1/adhesive layer 1/gas barrier layer/adhesive layer 2/basal layer 2/adhesive layer 3]/moisture-absorbing sealant layer [resin layer 1/moisture absorption layer/resin layer 2]

As for the moisture absorbability of the hygroscopic laminate of the present invention, the amount of moisture absorbed in 24 hours in an environment of 23°C and 50% RH is preferably 0.8 g/m² or more and 4.0 g/m² or less, and more preferably 1.0 g/m² or more and 3.0 g/m² or less.

The amount of moisture absorbed in 48 hours is preferably 1.5 g/m² or more and 6.0 g/m² or less, and more preferably 2.0 g/m² or more and 5.0 g/m² or less.

When the amount of moisture absorbed in 24 hours or 48 hours is smaller than the above moisture absorbability (the amount of moisture absorbed, the rate of moisture absorbed), the moisture absorbing effect may be insufficient for contents that deteriorate with even a small amount of moisture absorbed. When the amount of moisture absorbed is larger than the above range, the rate of moisture absorbed is excessively high, possibly resulting in poor workability.

The amount of moisture absorbed in two weeks is preferably 2.5 g/m² or more and 20.0 g/m² or less, and more preferably 3.0 g/m² or more and 15.0 g/m² or less.

When the amount of moisture absorbed in two weeks is less than the above moisture absorbability, the moisture absorbing effect may be insufficient. Also, an amount of moisture absorbed larger than the above moisture absorbability may result in excessive moisture absorption and increased costs.

To provide the hygroscopic laminate with antistatic properties, the outermost gas barrier base layer and/or the outermost moisture-absorbing sealant layer may have antistatic properties.

For example, an antistatic polyester film may be used as the basal layer disposed on the surface of the hygroscopic laminate, or an antistatic agent may be contained in the second resin layer of the moisture-absorbing sealant layer.

The intrinsic surface resistance of the surface having antistatic properties of the hygroscopic laminate is preferably 1.0x10⁷ Ω/□ or more and less than 1.0×10¹² Ω/□, and more preferably 1.0×10⁸ Ω/□ or more and less than 1.0×10¹¹ Ω/□.

Even when no antistatic agent is contained in the outermost layer, the intrinsic surface resistance of the surface having antistatic properties of the hygroscopic laminate is preferably 1.0x10⁷ Ω/□ or more and less than 1.0×10¹⁴ Ω/□.

An intrinsic surface resistance lower than the above range likely results in poor sealability and extremely high costs, and an intrinsic surface resistance higher than the above range likely results in insufficient antistatic properties.

Depending on the application of the hygroscopic laminate, e.g., when the hygroscopic laminate is used as a packaging material for semiconductor wafers, the elutable ion content is preferably small to suppress the contents of the package from being contaminated by ions.

The elutable ion content in the hygroscopic laminate can be measured by, for example, carrying out an extraction treatment using a 10 cm × 20 cm hygroscopic laminate and 100 g of ultrapure water in one atmosphere at 30°C for 20 minutes to give an extract, and then analyzing the extract.

The total content of five extracted elutable cations Li⁺, Na⁺, K⁺, Mg²⁺, and Ca²⁺ in the hygroscopic film is preferably 100 ppb or less, and more preferably 50 ppb or less.

The total content of seven extracted elutable anions F-, Cl-, NO₂⁻, Br-, NO₃⁻, SO₄²⁻, and PO₄²⁻ in the hygroscopic laminate is preferably 100 ppb or less, and more preferably 50 ppb or less.

Even when the total content of the five elutable cations is greater than 100 ppb, the hygroscopic laminate may be sufficiently usable depending on the application as long as the Na⁺ content and the K⁺ content is each 100 ppb or less.

Moreover, even when at least one of the Na⁺ content and the K⁺ content is greater than 100 ppb, the hygroscopic laminate may be sufficiently usable depending on the application.

Also, even when the total content of the seven elutable anions is greater than 100 ppb, the hygroscopic laminate may be sufficiently usable depending on the application as long as the Cl- content and the Br-content is each 100 ppb or less.

Moreover, even when at least one of the Cl⁻ content and the Br- content is greater than 100 ppb, the hygroscopic laminate may be sufficiently usable depending on the application.

The electrical conductivity of the extract obtained above is preferably 50 µS/m or less, and more preferably 40 µS/m or less.

The content of elutable cations and elutable anions extracted is most preferably 0 ppb, and the electrical conductivity of the extract is most preferably 0 S/cm or less, but it is difficult to attain such a content and such an electrical conductivity because of the impurities contained in materials and contamination during the course of manufacturing process.

The thickness of the hygroscopic laminate is preferably 50 µm or more and 250 µm or less, more preferably 60 µm or more and 200 µm or less, and even more preferably 70 µm or more and 150 µm or less to strike a good balance between moisture absorbability, rigidity, heat sealability, and antistatic properties. A thickness smaller than the above range may result in insufficient heat sealability, moisture absorbability, and antistatic properties, and a thickness larger than the above range may result in excessive rigidity and thus poor workability, a long time for heat sealing, increased costs, and poor moisture absorbability depending on the thick layer structure.

### <<Gas barrier base layer>>

The gas barrier base layer in the present invention refers to a base layer having gas barrier properties, and it may be composed of a single layer such as a gas barrier resin film having gas barrier properties and properties as a base, or may be composed of multiple layers including a gas barrier layer and a basal layer.

Also, an adhesive layer may be provided between the layers constituting the gas barrier base layer or between such constituting layers and other layers to improve adhesion, or a desired surface treatment layer may be provided in advance on the surfaces of such constituting layers as necessary.

For example, pretreatment may be carried out as desired, such as corona discharge treatment, ozone treatment, low-temperature plasma treatment with oxygen gas or nitrogen gas, glow discharge treatment, or oxidation treatment with chemicals or the like, and thus a corona treatment layer, an ozone treatment layer, a plasma treatment layer, an oxidation treatment layer, or the like may be formed/provided.

Alternatively, various coating agent layers may be formed on the surfaces of such constituting layers as desired, such as a primer coating agent layer, an undercoating agent layer, an anchor coating agent layer, an adhesive layer, and a vapor-deposited anchor coating agent layer, and regarded as surface treatment layers.

In the above various coating agent layers, for example, a resin composition may be used that contains a polyester resin, a polyurethane resin, an epoxy resin, a phenol resin, a (meth)acrylic resin, a polyvinyl acetate resin, a polyolefin resin such as polyethylene or polypropylene or a copolymer or modified resin thereof, a cellulose resin, or the like as a main component of a vehicle.

The thickness of the gas barrier base layer is preferably 5 µm or more and 50 µm or less, and more preferably 7 µm or more and 25 µm or less. A thickness smaller than the above range may result in insufficient rigidity and/or gas barrier properties, and a thickness larger than the above range may result in excessive rigidity and poor workability.

### <Basal layer>

A resin film, paper, or the like may be used in the basal layer, and the base layer may be composed of a single layer or a multiple layers including two or more layers having the same or different compositions.

The thickness of the basal layer varies according to the material and, in the case of a resin film, is preferably 5 µm or more and 50 µm or less, and more preferably 10 µm or more and 30 µm or less.

The resin film used in the basal layer may be a film of a thermoplastic resin, and is preferably a film of a thermoplastic resin that has excellent chemical or physical strength, withstands the conditions for forming a vapor-deposited film of metal or metal oxide, and is capable of favorably retaining the properties of such a vapor-deposited film without deterioration.

However, in the case of a basal layer formed of a highly hygroscopic resin, moisture contained in the basal layer migrates to the moisture-absorbing sealant layer and is absorbed by the moisture absorbing layer when the hygroscopic laminate of the present invention is stored in a rolled state, thus the moisture absorbability of the water absorbing layer is expended, and such a base layer is not preferable.

Examples of highly hygroscopic resins include polyamide resins such as various types of nylon, ethylene-vinyl alcohol copolymers, and polyvinyl alcohols.

Such a resin is preferably not contained in large amounts in the gas barrier base layer not only in the form of a basal layer but also in any other form.

Examples of the resin used in the basal layer include various resins, e.g., polyolefin resins such as polyethylene resins and polypropylene resins, cyclic polyolefin resins, polystyrene resins, acrylonitrile-styrene copolymers (AS resins), acrylonitrile-butadienestyrene copolymers (ABS resins), poly(meth)acrylic resins, polycarbonate resins, polyester resins such as polyethylene terephthalate and polyethylene naphthalate, polyurethane resins, and acetal resins.

In the present invention, the resin is preferably a polyester resin or a polyolefin resin, and is particularly preferably polyethylene terephthalate (PET) or polypropylene (PP).

In the present invention, the thermoplastic resin to be used in the basal layer can be formed into a film by various film forming methods.

Examples include a method in which one resin is formed into a film by a film forming method such as extrusion, casting, T-die method, cutting, or inflation, a method in which two or more resins are formed into a film by multilayer co-extrusion, and a method in which two or more resins are mixed before being formed into a film by the above film forming methods. Moreover, a tenter, tubular, or like method may be used to form a uniaxially or biaxially stretched film.

Alternatively, one or more resins may be applied to another resin film and dried for coating, or a molten resin may be laminated by T-die method or the like.

In the present invention, the resin film is preferably a polyester film, and more preferably a biaxially stretched PET film or a biaxially stretched PP film or sheet.

Various plastic supplements, additives and the like may be added to the resin film during the film formation thereof to improve or modify, for example, film processability, heat resistance, weather resistance, mechanical properties, dimensional stability, oxidation resistance, slipperiness, mold releasability, flame retardancy, mold resistance, electrical properties, and strength, and the amount of such supplements and additives added may suitably vary from an extremely small amount to several tens of percent according to the purpose.

In the above, examples of commonly used additives include lubricants, crosslinking agents, antioxidants, ultraviolet absorbers, photostabilizers, fillers, reinforcing agents, antistatic agents, pigments, and modifier resins.

### <Gas barrier layer>

The gas barrier layer is a layer that prevents atmospheric gas from passing through the hygroscopic laminate from the outside to the inside of a package produced with the hygroscopic laminate of the present invention.

The gas barrier base layer may have at least one or more basal layers and a gas barrier layer, wherein the basal layer may be a layer composed of a resin film, and the gas barrier layer may be a layer including a foil or a vapor-deposited film composed of an inorganic compound.

The gas barrier layer may be a layer containing an inorganic compound or a gas barrier resin, and specifically one or more selected from the group consisting of a gas barrier resin film, a metal foil, a resin film provided with a metal or metal oxide vapor-deposited layer, and a gas barrier resin coating film may be used in the gas barrier layer.

The gas barrier resin film may be a resin film having gas barrier properties. For example, specifically the gas barrier film is preferably a resin film composed of a resin such as PET, polybutylene terephthalate, polyethylene naphthalate, or polyimide.

The metal foil is preferably an aluminum foil having a thickness of 3 µm or more and 15 µm or less.

The resin film provided with a metal or metal oxide vapor-deposited layer is preferably a film obtained by forming an aluminum vapor-deposited film, a silica vapor-deposited film, or an aluminum oxide vapor-deposited film on at least one surface of the base resin film. A commercially available resin film provided with an aluminum oxide vapor-deposited film may be, for example, alumina-deposited IB-PET-PIR (thickness 12 µm) manufactured by Dai Nippon Printing Co., Ltd., which is a PET film containing alumina vapor-deposited on one surface by PVD method.

The gas barrier resin coating film is preferably a coating film containing a sol-gel hydrolysis polycondensate formed from a metal alkoxide and a watersoluble polymer.

The metal foil, or the resin film provided with a metal or metal oxide vapor-deposited layer, for the gas barrier layer can be bonded to other layers using a dry lamination adhesive.

Alternatively, a resin film for the basal layer may be used in place of the resin film of the resin film provided with a metal or metal oxide vapor-deposited layer, and thereby lamination to the basal layer can be omitted.

### <<Moisture-absorbing sealant layer>>

The moisture-absorbing sealant layer has a layer structure having at least a resin layer and a moisture absorption layer in a laminated manner, and is capable of quickly absorbing a large amount of moisture.

The moisture-absorbing sealant layer is preferably a layer composed of a hygroscopic film.

The resin layer is a layer containing a polyethylene resin, not containing a moisture absorbing agent, and having excellent heat sealability.

The moisture absorption layer is a layer containing a moisture absorbing agent and a polyethylene resin and having excellent moisture absorbability.

The moisture-absorbing sealant layer may further have a second resin layer and have a layer structure in which the aforementioned resin layer (hereinafter referred to as the first resin layer), the moisture absorption layer, and the second resin layer are laminated in this order.

The second resin layer is a layer containing a polyethylene resin, not containing a moisture absorbing agent, and having excellent heat sealability.

While a polyethylene resin is contained in each of the first resin layer, the moisture absorption layer, and the second resin layer of the present invention, the polyethylene resin contained in each layer may be the same or different.

The lower the density of the polyethylene resin is, and the thinner the second resin layer is, the faster the moisture-absorbing sealant layer can absorb moisture.

In the moisture-absorbing sealant layer, to enhance anti-blocking properties, the first resin layer, the moisture absorption layer, or the second resin layer when constituting the surface layer of the hygroscopic laminate may contain an anti-blocking agent.

The moisture-absorbing sealant layer may contain an antistatic agent in the outermost second resin layer when constituting the surface layer of the hygroscopic laminate to enhance antistatic properties (static electricity preventing properties, electrification preventing properties).

Here, the antistatic agent is preferably not contained in a layer that contains a moisture absorbing agent. When the antistatic agent is contained in a layer containing a moisture absorbing agent, there is a tendency that high antistatic properties are unlikely obtained.

However, when the antistatic agent is a polymer antistatic agent, sufficient antistatic properties can be obtained even when the moisture absorption layer contains the antistatic agent.

The moisture-absorbing sealant layer may further contain small amounts of a slipping agent, an antioxidant, a solvent, and other additives in addition to those described above.

The moisture-absorbing sealant layer may further have a layer other than the first resin layer, the moisture absorption layer, and the second resin layer as necessary.

The thickness of the moisture-absorbing sealant layer is preferably 20 µm or more and 200 µm or less, more preferably 30 µm or more and 150 µm or less, and even more preferably 50 µm or more and 120 µm or less to strike a good balance between moisture absorbability, rigidity, heat sealability, and antistatic properties. A thickness smaller than the above range may result in insufficient heat sealability, moisture absorbability, and antistatic properties, and a thickness larger than the above range may result in excessive rigidity and thus poor workability, a lowered heat seal rate, increased costs, and poor moisture absorbability depending on the thick layer structure.

### <First resin layer>

The first resin layer is the same as the first resin layer of the hygroscopic film described above.

### <Moisture absorption layer>

The moisture absorption layer is the same as the moisture absorption layer of the hygroscopic film described above.

### <Second resin layer>

The second resin layer is the same as the second resin layer of the hygroscopic film described above.

### «Adhesive layer»

The adhesive (the adhesive composition) forming the adhesive layer is the same as the adhesive of the hygroscopic film described above.

### <Anchor coat layer>

The anchor coat layer is the same as the anchor coat layer of the hygroscopic film described above.

### «Hygroscopic packaging material»

The hygroscopic packaging material of the present invention is the same as the hygroscopic packaging material of the hygroscopic film described above.

### <<Hygroscopic package>>

The hygroscopic package of the present invention is the same as the hygroscopic package of the hygroscopic package described above.

### <<Components>>

### [Polyethylene resin]

The polyethylene resin contained in each of the first resin layer, the moisture absorption layer, and the second resin layer is the same as the polyethylene resin of the hygroscopic film described above.

### [Moisture absorbing agent]

The moisture absorbing agent in the present invention is the same as the moisture absorbing agent of the hygroscopic film described above.

### (Hydrophilic zeolite)

Hydrophilic zeolite is the same as hydrophilic zeolite of the hygroscopic film described above.

### (Improvement of dispersibility by forming moisture absorbing agent into masterbatch)

Improvement of dispersibility by forming the moisture absorbing agent into a masterbatch is the same as the improvement of dispersibility by forming the moisture absorbing agent into a masterbatch described above.

### [Anti-blocking agent]

The anti-blocking agent is the same as the anti-blocking agent of the hygroscopic film described above.

### <Antistatic agent>

The antistatic agent in the present invention is the same as the antistatic agent of the hygroscopic film described above.

A low molecular weight antistatic agent such as a surfactant may lose its antistatic performance depending on the type of the moisture absorbing agent.

However, a polymer-type antistatic agent, even when used in combination with a moisture absorbing agent, can maintain both moisture absorbability and antistatic properties without losing its antistatic performance.

### [Method for producing hygroscopic laminate]

The production method provided below is one example, and the present invention is not limited thereto.

Film formation and lamination for the layers constituting the hygroscopic laminate are not particularly limited, and known or commonly used film formation and lamination methods are applicable. For example, any method may be used such as wet lamination, dry lamination, solventless dry lamination, extrusion lamination, T-die co-extrusion molding, co-extrusion lamination, inflation, or the like.

The resulting hygroscopic laminate may be subjected to secondary processing to impart, for example, surface functions such as chemical functions, electrical functions, magnetic functions, mechanical functions, friction/abrasion/lubrication functions, optical functions, thermal functions, and biocompatibility.

Examples of secondary processing include embossing, painting, bonding, printing, metallizing (such as plating), machining, and surface treatment (such as antistatic treatment, corona discharge treatment, plasma treatment, photochromism treatment, physical vapor deposition, chemical vapor deposition, and coating).

One example of producing a hygroscopic laminate having a layer structure of gas barrier base layer [basal layer /adhesive layer/gas barrier layer]/adhesive layer/moisture-absorbing sealant layer [first resin layer/moisture absorption layer/second resin layer] will now be described below.

### (Production of hygroscopic film)

A resin composition for the first resin layer, a resin composition for the moisture absorption layer, and a resin composition for the second resin layer are each provided by being prepared, and subjected to an inflation method to give a hygroscopic film having the following layer structure.
Layer structure: first resin layer/moisture absorption layer/second resin layer

### (Production of hygroscopic laminate)

Next, a base film for the basal layer, an aluminum foil for the gas barrier layer, and the hygroscopic film for the moisture-absorbing sealant layer obtained above are bonded together in this order by dry lamination (e.g., application amount: 3.5 g/m², drying temperature: 70°C) via a dry laminate (DL) adhesive for the adhesive layer to give a hygroscopic laminate having the above layer structure.

For example, using the polyester film, the DL adhesive, the aluminum foil, and the hygroscopic film, a hygroscopic laminate having the following layer structure can be produced by dry lamination.

Layer structure: gas barrier base layer [polyester film (25 µm thick)/DL adhesive 1 (3.5 g/m²)/aluminum foil 1 (7 µm thick)/DL adhesive 1 (3.5 g/m²)/polyester film (16 µm thick)]/DL adhesive 1 (3.5 g/m²)/moisture-absorbing sealant layer [first resin layer (30 µm thick)/moisture absorption layer (40 µm thick)/second resin layer (10 µm thick)]

### (Film forming/laminating method for sealant layer of another embodiment)

The moisture-absorbing sealant layer may be laminated onto another layer such as a gas barrier base layer by an extrusion coating method involving extrusion or co-extrusion. In the case of an extrusion coating method as well, the moisture-absorbing sealant layer may be laminated via an adhesive layer as necessary.

### <<Method for producing hygroscopic package>>

The hygroscopic package of the present invention can be produced by folding the hygroscopic packaging material of the present invention or placing two pieces of the hygroscopic packaging material one on top of the other such that the heat-sealing surfaces face each other, and heat-sealing the circumferential edges, for example, in a side seal type, two-side seal type, three-side seal type, four-side seal type, envelope seal type, center seal type (pillow seal type), pleated seal type, flat-bottom seal type, square-bottom seal type, gazette seal type, or like heat seal form.

Examples of the heat sealing method include bar sealing, rotary roll sealing, belt sealing, impulse sealing, high frequency sealing, and ultrasonic sealing.

Details of the method for producing a hygroscopic package containing 300 mm semiconductor silicon wafers are as follows.

First, about twenty to thirty 300 mm semiconductor silicon wafers are accommodated in a dedicated carrier case.

Next, two sheets of the hygroscopic packaging material of the present invention having about 500 mm × 500 mm are provided, the three sides of the hygroscopic packaging material are heat-sealed to a width of about 10 mm such that the heat-sealing surfaces face each other, and thus a hygroscopic packaging pouch, the only one side of which is not heat-sealed, is obtained.

The dedicated carrier case containing the semiconductor silicon wafers is then placed in the resulting hygroscopic packaging pouch, and the remaining one side is heat-sealed to a width of about 10 mm to give a filled hygroscopic package. At this time, degassed packaging may be performed as necessary.

As another embodiment of the present invention, details of the method for producing a hygroscopic package containing 300 mm semiconductor silicon wafers are as follows.

First, about twenty to thirty 300 mm semiconductor silicon wafers are accommodated in a dedicated carrier case.

Then, as a laminate of the hygroscopic packaging material of the present invention, a hygroscopic laminate having the following layer structure is produced by dry lamination using a polyester film, a DL adhesive, an aluminum foil, and a hygroscopic film.

Layer structure: gas barrier base layer [polyester film (25 µm thick)/DL adhesive 1 (3.5 g/m²)/aluminum foil 1 (7 µm thick)/DL adhesive 1 (3.5 g/m²)/polyester film (16 µm thick)]/DL adhesive 1 (3.5 g/m²)/moisture-absorbing sealant layer [first resin layer (30 µm thick)/moisture absorption layer (40 µm thick)/second resin layer (10 µm thick)]

Next, two sheets of, for example, the above laminate as the hygroscopic packaging material of the present invention having about 500 mm × 500 mm are provided, the three sides of the hygroscopic packaging material are heat-sealed to a width of about 10 mm such that the heat-sealing surfaces face each other, and thus a hygroscopic packaging pouch, the only one side of which is not heat-sealed, is obtained.

The dedicated carrier case containing the semiconductor silicon wafers is then placed in the resulting hygroscopic packaging pouch, and the remaining one side is heat-sealed to a width of about 10 mm to give a filled hygroscopic package. At this time, degassed packaging may be performed as necessary.

### Examples

### Examples concerning hygroscopic films

Details of materials used in the Examples are as follows.

### [Moisture absorbing agents]

- Metal oxide 1: Calcium oxide, F-lime 1300-K manufactured by Calfine Co., Ltd. Average particle size: 4.3 µm.

### [Polyethylene resins]

- Polyethylene resin 1: LDPE, Novatec LC520 manufactured by Japan Polyethylene Corporation. Density 0.923 g/cm³, MFR 3.6 g/10 min.
- Polyethylene resin 2: Uz2020L manufactured by Prime Polymer Co., Ltd. Density 0.919 g/cm³, MFR 2.0 g/10 min. Linear polyethylene copolymer of ethylene and 1-hexene.
- Polyethylene resin 3: KF260T manufactured by Japan Polyethylene Corporation. Density 0.901 g/cm³, MFR 2.0 g/10 min. Linear polyethylene copolymer of ethylene and 1-hexene.

- Polyethylene resin 4: Uz1520L manufactured by Prime Polymer Co., Ltd. Density 0.914 g/cm³, MFR 2.3 g/10 min. Linear polyethylene copolymer of ethylene and 1-hexene.
- Polyethylene resin 5: KS340T manufactured by Japan Polyethylene Corporation. Density 0.880 g/cm³, MFR 3.5 g/10 min. Linear polyethylene copolymer of ethylene and 1-hexene.
- Polyethylene resin 6: Uz3520L manufactured by Prime Polymer Co., Ltd. Density 0.931 g/cm³, MFR 2.1 g/10 min. Linear polyethylene copolymer of ethylene and 1-hexene.
- Polyethylene resin 7: SP0510 manufactured by Prime Polymer Co., Ltd. Density 0.903 g/cm³, MFR 1.2 g/10 min. Linear polyethylene copolymer of ethylene and 1-hexene.

### [Polymer antistatic agents]

- AS agent 1: Entira SD100, an ionomer antistatic agent manufactured by Dow-Mitsui Polychemicals. Density 0.985 g/cm³. MFR 5.5 g/10 min.
- AS agent 2: Pelestat 230, an antistatic agent manufactured by Sanyo Chemical Industries, Ltd. Nonionic polymer antistatic agent.

### Polyether/polypropylene/polyamide copolymer.

- AS agent 3: Pelestat 201, an antistatic agent manufactured by Sanyo Chemical Industries, Ltd. Nonionic polymer antistatic agent containing ion conductive material. Polyether/polypropylene/polyamide copolymer.
- AS agent 4: Capron P-70, an antistatic agent manufactured by Nisshin Kagaku Kenkyusho Co., Ltd. Cationic polymer antistatic agent. Contains cationic ion conductive material.
- AS agent 5: Sankonol TBX-310, an antistatic agent manufactured by Sanko Chemical Industry Co., Ltd. Anionic polymer antistatic agent. Contains anionic ion conductive material.

### [Anti-blocking agents]

- AB agent 1: Sumikathene E EMB-21, an AB agent manufactured by Sumitomo Chemical Co., Ltd. Density 0.960 g/cm³, MFR 4.0 g/10 min. Contains 10% by mass zeolite as anti-blocking agent component and about 90% by mass LLDPE.
- AB agent 2: UMERIT-27308M, an AB agent manufactured by Ube Maruzen Polyethylene. Density 0.970 g/cm³, MFR 4.0 g/10 min. Contains 30% by mass PMMA as anti-blocking agent component and about 70% by mass LLDPE.

### [Preparation of masterbatch]

The masterbatch used in a moisture absorption layer was prepared as follows.

### (Preparation of masterbatch 1)

Polyethylene resin 1 and metal oxide 1 were melt-blended in the following proportions to prepare masterbatch 1 (MB1).

| | |
|---|---|
| Polyethylene resin 1 | 40 parts by mass |
| Metal oxide 1 | 60 parts by mass |

### <<A: When there is no second resin layer>>

### [Example A1]

### (Preparation of resin composition for first resin layer)

Polyethylene resin 2 and AB agent 1 were dry-blended in the following proportions to prepare a resin composition for the first resin layer.

| | |
|---|---|
| Polyethylene resin 2 | 95 parts by mass |
| AB agent 1 | 5 parts by mass |

### (Preparation of resin composition for first moisture absorption layer)

Masterbatch 1 and polyethylene resin 2 were dry-blended in the following proportions to give a resin composition for the first moisture absorption layer.

| | |
|---|---|
| Masterbatch 1 | 67 parts by mass |
| Polyethylene resin 2 | 33 parts by mass |

### (Preparation of resin composition for second moisture absorption layer)

The following materials were dry-blended in the following proportions to give a resin composition for the second moisture absorption layer.

| | |
|---|---|
| Masterbatch 1 | 67 parts by mass |
| Polyethylene resin 2 | 26 parts by mass |
| AB agent 1 | 5 parts by mass |
| AB agent 2 | 2 parts by mass |

### (Production of hygroscopic film)

The resin composition for the first moisture absorption layer, the resin composition for the first moisture absorption layer, and the resin composition for the second moisture absorption layer obtained above were formed into a film and laminated by co-extrusion film formation to give a hygroscopic film (80 µm thick) having the following layer structure. Then, various evaluations were made.
Layer structure: first resin layer/first moisture absorption layer/second moisture absorption layer = 20 µm thick/40 µm thick/20 µm thick

### [Examples A2 to A5, Comparative Examples A1 to A3]

A resin composition for the first resin layer, a resin composition for the first moisture absorption layer, and a resin composition for the second moisture absorption layer were prepared according to Table 1 in the same manner as Example A1, and a hygroscopic film was produced and similarly evaluated.

### «B: When there is second resin layer>>

### [Example B1]

### (Preparation of resin composition for first resin layer)

Polyethylene resin 3 and AB agent 1 were dry-blended in the following proportions to prepare a resin composition for the first resin layer.

| | |
|---|---|
| Polyethylene resin 3 | 95 parts by mass |
| AB agent 1 | 5 parts by mass |

### (Preparation of resin composition for moisture absorption layer)

Masterbatch 1 and polyethylene resin 3 were dry-blended in the following proportions to give a resin composition for the moisture absorption layer.

| | |
|---|---|
| Masterbatch 1 | 67 parts by mass |
| Polyethylene resin 3 | 33 parts by mass |

### (Preparation of resin composition for second resin layer)

The following materials were dry-blended in the following proportions to prepare a resin composition for the second resin layer.

| | |
|---|---|
| Polyethylene resin 3 | 78 parts by mass |
| AB agent 1 | 5 parts by mass |
| AB agent 2 | 2 parts by mass |
| AS agent 1 | 15 parts by mass |

### (Preparation of hygroscopic film)

The resin composition for the first moisture absorption layer, the resin composition for the moisture absorption layer, and the resin composition for the second resin layer obtained above were formed into a film and laminated by co-extrusion film formation to give a hygroscopic film (80 µm thick) having the following layer structure. Then, various evaluations were made.
Layer structure: first resin layer/moisture absorption layer/second resin layer = 20 µm thick/40 µm thick/20 µm thick

### [Example B2 to B5, Comparative Examples B1 to B4]

A resin composition for the first resin layer, a resin composition for the moisture absorption layer, and a resin composition for the second resin layer were prepared according to Table 2 in the same manner as Example B1, and a hygroscopic film was produced and similarly evaluated.

### «C: In the case of low-elutability ions»

### [Example C1]

### (Preparation of resin composition for first resin layer)

Polyethylene resin 2 and AB agent 1 were dry-blended in the following proportions to prepare a resin composition for the first resin layer.

| | |
|---|---|
| Polyethylene resin 2 | 95 parts by mass |
| AB agent 1 | 5 parts by mass |

### (Preparation of resin composition for moisture absorption layer)

Masterbatch 1 and polyethylene resin 3 were dry-blended in the following proportions to give a resin composition for the moisture absorption layer.

| | |
|---|---|
| Masterbatch 1 | 67 parts by mass |
| Polyethylene resin 3 | 33 parts by mass |

### (Preparation of resin composition for second resin layer)

The following materials were dry-blended in the following proportions to prepare a resin composition for the second resin layer.

| | |
|---|---|
| Polyethylene resin 4 | 78 parts by mass |
| AB agent 1 | 5 parts by mass |
| AB agent 2 | 2 parts by mass |
| AS agent 3 | 15 parts by mass |

### (Preparation of hygroscopic film)

The resin composition for the first moisture absorption layer, the resin composition for the moisture absorption layer, and the resin composition for the second resin layer obtained above were formed into a film and laminated by co-extrusion film formation to give a hygroscopic film (80 µm thick) having the following layer structure. Then, various evaluations were made.
Layer structure: first resin layer/moisture absorption layer/second resin layer = 30 µm thick/40 µm thick/10 µm thick

### [Examples C2 to C5, Comparative Example C1]

A resin composition for the first resin layer, a resin composition for the moisture absorption layer, and a resin composition for the second resin layer were prepared according to Table 3 in the same manner as Example C1, and a hygroscopic film was produced and similarly evaluated.

### <Evaluation method>

### [Film formability]

The appearance of the hygroscopic film was observed and sensorily evaluated. The evaluation criteria are as follows:
Good (circle): Film formation is possible without wrinkles or protrusions.
Poor (cross mark): Numerous wrinkles and protrusions are formed, and film formation is difficult.

### [Amount of moisture absorbed in 24 hours and 48 hours]

The weight change of a 10 cm × 10 cm hygroscopic film in 24 hours and 48 hours in an environment of 23°C and 50% RH was measured, and the amount of moisture absorbed was calculated according to the following formula: Amount of moisture absorbed (g/m2) = [Weight after moisture absorption (g) - Initial dry weight (g)] / 0.01 (m2)

### [Largest amount of moisture absorbed]

A 10 cm × 10 cm hygroscopic film was placed in an aluminum laminate pouch, vacuum-packaged, and stored in an environment of 23°C for one week. The hygroscopic film was then removed and stored in an environment of 23°C and 50% RH for two weeks, and the maximum amount of moisture absorbed was measured based on the weight change. [Weight after storage (g) - Initial dry weight (g)] / 0.01 (m²) = Amount of moisture absorbed (g/m²).

### [Antistatic properties]

The intrinsic surface resistivity of the surface of the second resin layer was measured in an environment of 23°C and 50% RH with "Hiresta-UP" manufactured by Mitsubishi Chemical Corporation.

### [Content of elutable ions]

First, the resulting hygroscopic film was cut into a 10 cm × 20 cm piece and folded in half, three sides were heat-sealed to give a pouch, and the weight of the pouch was measured.

Then, 100 g of ultrapure water was introduced into the pouch prepared above, and extracted by being heated at 30°C for 20 minutes in one atmosphere, and then cooled to about 30°C to give an extract.

The concentrations of the following cations and anions in the extract were measured with an ion chromatography "ICS-6000" manufactured by Thermo Fisher Scientific, and the content of each cation and anion in the hygroscopic film was calculated.
Cationic species: Li⁺, Na⁺, NH₄⁺, K⁺, Mg²⁺, Ca²⁺
Anionic species: F~, Cl-, NO₂⁻, Br-, NO₃⁻, SO₄²⁻, PO₄³⁻
Symbols in the table have the following meanings: (Cation)
Good (circle): The total content of the above cationic species is 100 ppb or less.
Fair (triangle): The content of each of Na⁺ and K⁺ is 100 ppb or less, but the total content of the above cationic species is greater than 100 ppb.
Poor (cross mark): The content of at least one of Na⁺ and K⁺ is greater than 100 ppb.
   (Anion)
Good (circle): The total content of the above anionic species is 100 ppb or less.
Fair (triangle): The content of each of Cl⁻ and Br⁻ is 100 ppb or less, but the total content of the above anionic species is greater than 100 ppb.
Poor (cross mark): The content of at least one of Cl- and Br- is greater than 100 ppb.

### [Electrical conductivity of extract]

The electrical conductivity of the extract obtained in the measurement of the content of elutable ions was measured with a conductivity sensor "1.5Tri 0.1C SS ISM" manufactured by Mettler Toledo.

Symbols in the table have the following meanings:
Good (circle): Electrical conductivity is 50 µS/m or less.
Poor (cross mark): Electrical conductivity is greater than 50 µS/m.

### [Heat seal strength]

The hygroscopic film was cut into 10 cm × 10 cm pieces, one piece was placed on top of another such that the first resin layers or the second resin layers face each other, and a 1 cm × 10 cm area was heat-sealed with a heat seal tester (TP-701-A manufactured by Tester Sangyo Co., Ltd.) such that the edge was bifurcated not being heat-sealed.

The film was then cut into a strip having a width of 15 mm to produce a test piece for measuring heat seal strength.

Each bifurcated edge of the test piece was attached to a tensile tester and pulled so as to separate the heat-sealed portion and measure heat seal strength (N/15 mm width).

### (Heat seal conditions)

Temperature: 180°C
Pressure: 1 kgf/cm²
Time: 1 sec

### (Tensile strength test conditions)

Test rate: 300 mm/min
Load range: 50 N

### <Result Summary>

The hygroscopic films of all Examples of the present invention showed good film formability, moisture absorbability, and antistatic properties.

However, Comparative Examples A1 and A2, which did not contain a moisture absorbing agent, showed insufficient moisture absorbability, and Comparative Examples A3 and B1, which did not contain a sufficient amount of polyethylene resin having a density of 0.880 g/cm³ or more and 0.930 g/cm³ or less in the moisture absorption layer, showed insufficient moisture absorbability.

Comparative Examples B2, B3, and B4, which did not contain an antistatic agent in the second resin layer, showed poor antistatic properties.

In addition, Examples C1 to C5, in which the second resin layer contained a polymer antistatic agent and had a melt flow rate of 2.8 g/10 min or more and 10 g/10 min or less, showed a good balance between film formability, moisture absorbability, antistatic properties, and heat sealability, but Comparative Example C1, in which the second resin layer contained a polymer antistatic agent and had a melt flow rate of less than 2.8 g/10 min, showed poor heat sealability.

**[Table 1]**

| | Item | | | | Unit | Example A | | | | | Comparative Example A | | |
|---|---|---|---|---|---|---|---|---|---|---|---|---|---|
| | | | | | | 1 | 2 | 3 | 4 | 5 | 1 | 2 | 3 |
| | Layer thickn ess | First resin layer | | See below for formulation and composition | µm | 20 | 20 | 20 | 20 | 20 | 20 | 20 | 20 |
| | | Moisture absorptio n layer | First moisture absorption layer | See below for formulation and composition | µm | 40 | 40 | 40 | 40 | 40 | 40 | 40 | 40 |
| | | | Second moisture absorption layer | See below for formulation and composition | µm | 20 | 20 | 20 | 20 | 20 | 20 | 20 | 20 |
| | | First resin layer | | Polvethylene resin 2 | part by mass | 95 | | | | | 95 | | |
| | | | | Polyethylene resin 3 | part by mass | | 95 | 95 | 95 | 95 | | 95 | |
| | | | | Polvethylene resin 6 | part by mass | | | | | | | | 95 |
| | | | | AB agent 1 | part by mass | 5 | 5 | 5 | 5 | 5 | 5 | 5 | 5 |
| | | | First moisture absorption layer | Masterbatch 1 | part by mass | 67 | 67 | 67 | 67 | 67 | 67 | 67 | 67 |
| | | | | Polvethylene resin 2 | part by mass | 33 | | | | | 33 | | |
| | | | | Polyethylene resin 3 | part by mass | | 33 | | | | | 33 | |
| Hygroscopic film layer structure | | | | Polvethylene resin 4 | part by mass | | | 33 | | | | | |
| | | | | Polyethylene resin 5 | part by mass | | | | 33 | 8 | | | |
| | | | | Polyethylene resin 6 | part by mass | | | | | 25 | | | 33 |
| | Formu lation | Moisture absorptio n layer | Second moisture absorption layer | Masterbatch 1 | part by mass | 67 | 67 | 67 | 67 | 67 | | | 67 |
| | | | | Polyethylene resin 2 | part by mass | 26 | | | | | 93 | | |
| | | | | Polvethylene resin 3 | part by mass | | 26 | 26 | 26 | 6 | | 93 | |
| | | | | Polvethylene resin 6 | part by mass | | | | | 20 | | | 26 |
| | | | | AB agent 1 | part by mass | 5 | 5 | 5 | 5 | 5 | 5 | 5 | 5 |
| | | | | AB agent 2 | part by mass | 2 | 2 | 2 | 2 | 2 | 2 | 2 | 2 |
| | Comp osition | First resin layer | | Polyethylene resin | part by mass | 99.5 | 99.5 | 99.5 | 99.5 | 99.5 | 99.5 | 99.5 | 99.5 |
| | | | | Zeolite | part by mass | 0.5 | 0.5 | 0.5 | 0.5 | 0.5 | 0.5 | 0.5 | 0.5 |
| | | Moisture absorptio n layer | First moisture absorption layer | Polyethylene resin with density of 0.880 to 0.930 g/cm³ | part by mass | 59.8 | 59.8 | 59.8 | 59.8 | 34.8 | 59.8 | 59.8 | 26.8 |
| | | | | Moisture absorbing agent | part by mass | 40.2 | 40.2 | 40.2 | 40.2 | 40.2 | 40.2 | 40.2 | 40.2 |
| | | | Second moisture absorption layer | Polyethylene resin with density of 0.880 to 0.930 g/cm³ | part by mass | 58.7 | 58.7 | 58.7 | 58.7 | 38.7 | 98.9 | 98.9 | 32.7 |
| | | | | Other polvethylene resins | part by mass | 0.0 | 0.0 | 0.0 | 0.0 | 20.0 | 0.0 | 0.0 | 26.0 |
| | | | | Moisture absorbing agent | part by mass | 40.2 | 40.2 | 40.2 | 40.2 | 40.2 | 0.0 | 0.0 | 40.2 |
| | | | | Zeolite, PMMA | part by mass | 1.1 | 1.1 | 1.1 | 1.1 | 1.1 | 1.1 | 1.1 | 1.1 |
| Evaluation result | Amount of moisture absorbed | | | 24 hours later | g/m² | 2.69 | 2. 82 | 2. 97 | 2.88 | 2.21 | 1.46 | 1.67 | 1.98 |
| | | | | 48 hours later | g/m² | 5.70 | 5. 53 | 5. 39 | 5.04 | 4.58 | 3.03 | 3.45 | 3.90 |
| | | | | Maximum amount of moisture absorbed | g/m² | 10.23 | 10. 56 | 10. 30 | 10.18 | 10.31 | 7.12 | 7.45 | 10.11 |
| | Intrinsic surface resistivity (surface of second resin layer) | | | | Ω/□ | >10¹⁴ | >10¹⁴ | >10¹⁴ | >10¹⁴ | >10¹⁴ | >10¹⁴ | >10¹⁴ | >10¹⁴ |

**[Table 2]**

| | Item | | | Unit | Example B | | | | | Comparative Example B | | | |
|---|---|---|---|---|---|---|---|---|---|---|---|---|---|
| | | | | | 1 | 2 | 3 | 4 | 5 | 1 | 2 | 3 | 4 |
| | Layer thickne ss | First resin layer | See below for formulation and composition | µm | 20 | 20 | 20 | 30 | 30 | 20 | 20 | 20 | 20 |
| | | Moisture absorption layer | See below for formulation and composition | µm | 40 | 40 | 40 | 40 | 40 | 40 | 40 | 40 | 40 |
| | | Second resin layer | See below for formulation and composition | µm | 20 | 20 | 20 | 10 | 10 | 20 | 20 | 20 | 20 |
| | | | Polyethylene resin 2 | part by mass | 95 | | | 95 | | | 95 | 95 | 95 |
| | | | Polyethylene resin 3 | part by mass | | | 95 | | | | | | |
| | | First resin layer | Polvethylene resin 4 | part by mass | | 95 | | | 95 | | | | |
| | | | Polyethylene resin 6 | part by mass | | | | | | 95 | | | |
| | | | AB agent 1 | part by mass | 5 | 5 | 5 | 5 | 5 | 5 | 5 | 5 | 5 |
| | | | Masterbatch 1 | part by mass | 67 | 67 | 67 | 67 | 67 | 67 | 67 | 67 | 67 |
| | | | Polyethylene resin 2 | part by mass | 33 | | | 33 | | | 33 | 33 | 33 |
| Hygroscopic film layer structure | Formul ation | Moisture | Polvethylene resin 3 | part by mass | | | 33 | | | | | | |
| | | absorption layer | Polyethylene resin 4 | part by mass | | 33 | | | 33 | | | | |
| | | | Polyethylene resin 6 | part by mass | | | | | | 33 | | | |
| | | | Polvethylene resin 2 | part by mass | 78 | | | 78 | | | 93 | 93 | 93 |
| | | | Polyethylene resin 3 | part by mass | | | 78 | | | | | | |
| | | | Polvethylene resin 4 | part by mass | | 78 | | | 78 | | | | |
| | | Second resin | Polvethylene resin 6 | part by mass | | | | | | 78 | | | |
| | | layer | AB agent 1 | part by mass | 5 | 5 | 5 | 5 | 5 | 5 | 5 | 5 | 5 |
| | | | AB agent 2 | part by mass | 2 | 2 | 2 | 2 | 2 | 2 | 2 | 2 | 2 |
| | | | AS agent 1 | part by mass | 15 | 15 | 15 | 15 | 15 | 15 | | | |
| | Compo sition | First resin layer | Polyethylene resin | part by mass | 99.5 | 99.5 | 99.5 | 99.5 | 99.5 | 99.5 | 99.5 | 99.5 | 99.5 |
| | | | Zeolite | part by mass | 0.5 | 0.5 | 0.5 | 0.5 | 0.5 | 0.5 | 0.5 | 0.5 | 0.5 |
| | | Moisture absorption layer | Polyethylene resin with density of 0.880 to 0.930 g/cm³ | part by mass | 59.8 | 59.8 | 59.8 | 59.8 | 59.8 | 26.8 | 59.8 | 59.8 | 59.8 |
| | | | Moisture absorbing agent | part by mass | 40.2 | 40.2 | 40.2 | 40.2 | 40.2 | 40.2 | 40.2 | 40.2 | 40.2 |
| | | Second resin layer | Polyethylene resin with density of 0.880 to 0.930 g/cm³ | part by mass | 83.9 | 83.9 | 83.9 | 83.9 | 83.9 | 5.9 | 98.9 | 98.9 | 98.9 |
| | | | Other Polyethylene resins | part by mass | 0.0 | 0.0 | 0.0 | 0.0 | 0.0 | 78.0 | 0.0 | 0.0 | 0.0 |
| | | | Zeolite, PMMA | part by mass | 1.1 | 1.1 | 1.1 | 1.1 | 1.1 | 1.1 | 1.1 | 1.1 | 1.1 |
| | | | Polymer antistatic agent | part by mass | 15.0 | 15.0 | 15.0 | 15.0 | 15.0 | 15.0 | 0.0 | 0.0 | 0.0 |
| Evaluation result | Amount of moisture absorbed | | 24 hours later | g/m² | 2.86 | 2.52 | 3.59 | 3.15 | 2.90 | 1.79 | 1.81 | 1.69 | 1.71 |
| | | | 48 hours later | g/m² | 4.72 | 5.04 | 4.98 | 5.10 | 4.78 | 3.58 | 3.58 | 3.32 | 3.44 |
| | | | Maximum amount of moisture absorbed | g/m² | 7.12 | 7.16 | 7.21 | 7.33 | 7.21 | 7.12 | 7.21 | 7.23 | 7.11 |
| | Intrinsic surface resistivity (surface of second resin layer) | | | Ω/□ | 3×10¹⁰ | 4×10¹⁰ | 3×10¹⁰ | 2×10¹⁰ | 3×10¹⁰ | 3×10¹⁰ | >10¹⁴ | >10¹⁴ | >10¹⁴ |

**[Table 3]**

| | Item | | | Unit | Example C | | | | | Comparative Example C |
|---|---|---|---|---|---|---|---|---|---|---|
| | | | | | 1 | 2 | 3 | 4 | 5 | 1 |
| | Layer thickness | First resin layer | See below for formulation and composition | µm | 30 | 30 | 30 | 30 | 30 | 30 |
| | | Moisture absorption layer | See below for formulation and composition | µm | 40 | 40 | 40 | 40 | 40 | 40 |
| | | Second resin layer | See below for formulation and composition | µm | 10 | 10 | 10 | 10 | 10 | 10 |
| | | First resin layer | Polyethylene resin 2 | part by mass | 95 | 95 | 95 | 95 | 95 | 95 |
| | | | AB agent 1 | part by mass | 5 | 5 | 5 | 5 | 5 | 5 |
| | | Moisture absorption layer | Masterbatch 1 | part by mass | 67 | 67 | 67 | 67 | 67 | 67 |
| Hygroscopic film layer structure | Formulati on | | Polyethylene resin 3 | part by mass | 33 | 33 | 33 | 33 | 33 | 33 |
| | | | AS agent 2 | part by mass | | 15 | 15 | | | |
| | | Second resin layer | Polyethylene resin 4 | part by mass | 78 | 78 | 78 | 78 | 78 | |
| | | | Polyethylene resin 7 | part by mass | | | | | | 78 |
| | | | AB agent 1 | part by mass | 5 | 5 | 5 | 5 | 5 | 5 |
| | | | AB agent 2 | part by mass | 2 | 2 | 2 | 2 | 2 | 2 |
| | | | AS agent 1 | part by mass | | | 15 | | | |
| | | | AS agent 3 | part by mass | 15 | 15 | | | | 15 |
| | | | AS agent 4 | part by mass | | | | 15 | | |
| | | | AS agent 5 AS agent 5 | part by part by mass | | | | | 15 | |
| | | First resin layer | Polyethylene resin | part by mass | 99.5 | 99.5 | 99.5 | 99.5 | 99.5 | 99.5 |
| | | | Zeolite | part by mass | 0.5 | 0.5 | 0.5 | 0.5 | 0.5 | 0.5 |
| | | Moisture absorption layer | Polyethylene resin with density of 0.880 to 0.930 g/cm³ | part by mass | 59.8 | 59.8 | 59.8 | 59.8 | 59.8 | 59.8 |
| | | | Polymer antistatic agent | part by mass | 0.0 | 15.0 | 15.0 | 0.0 | 0.0 | 0.0 |
| | Composit ion | | Moisture absorbing agent | part by mass | 40.2 | 40.2 | 40.2 | 40.2 | 40.2 | 40.2 |
| | | Second resin layer | Polyethylene resin with density of 0.880 to 0.930 g/cm³ | part by mass | 83.9 | 83.9 | 83.9 | 83.9 | 83.9 | 83.9 |
| | | | Polyethylene resin with MFR of 2.0 g/10 min or more | part by mass | 83.9 | 83.9 | 83.9 | 83.9 | 83.9 | 5.9 |
| | | | Zeolite, PMMA | part by mass | 1.1 | 1.1 | 1.1 | 1.1 | 1.1 | 1.1 |
| | | | Polymer antistatic agent | part by mass | 15.0 | 15.0 | 15.0 | 15.0 | 15.0 | 15.0 |
| | | | MFR of second resin layer | g/10 min | 3.6 | 3.6 | 2.9 | 3.4 | 3.3 | 2.7 |
| Evaluation result | Amount of moisture absorbed | | 24 hours later | g/m² | 2.56 | 3.05 | 2.46 | 2.51 | 2.55 | 2.46 |
| | | | 48 hours later | g/m² | 5.13 | 6.10 | 4.93 | 5.02 | 5.01 | 4.91 |
| | | | Maximum amount of moisture absorbed | g/m² | 8.11 | 9.10 | 7.14 | 7.45 | 7.65 | 6.09 |
| | Intrinsic surface resistivity (surface of second resin layer) | | | Ω/□ | 1×10¹² | 1×10¹¹ | 1×10¹² | 1×10¹² | 1×10¹² | 1×10¹¹ |
| | Content of elutable ion | | Cation | - | ○ | ○ | ○ | ○ | Δ | ○ |
| | | | Anion | - | ○ | ○ | × | Δ | ○ | ○ |
| | Electrical conductivity of liquid extract | | | - | ○ | ○ | × | × | × | ○ |
| | Heat seal strength (180°C) | | | N/15 mm width | 61 | 49 | 50 | 59 | 55 | 38 |

### Examples concerning hygroscopic laminates

Details of materials used in the Examples are as follows.

### [Basal layer]

- Polyester film 1: E5100 manufactured by Toyobo Co., Ltd. 12 µm thick.
- Polyester film 2: E5200 manufactured by Toyobo Co., Ltd. 12 µm thick.
- Antistatic polyester film: T6140 manufactured by Toyobo Co., Ltd. 12 µm thick.
- Polyamide film: N1102 manufactured by Toyobo Co., Ltd. 15 µm thick.

### [Gas barrier layer]

- Aluminum foil 1: 1N30 manufactured by Toyo Aluminium K.K. 7 µm thick.

### [Adhesive layer]

DL adhesive 1: Adlock RU77T/H7 manufactured by Rock Paint Co., Ltd. Polyester adhesive.

### [Moisture absorbing agent]

- Metal oxide 1: Calcium oxide, F-Lime 1300-K manufactured by Calfine Co., Ltd. Average particle size 4.3 µm.

### [Polyethylene resins]

- Polyethylene resin 1: LDPE, Novatec LC520 manufactured by Japan Polyethylene Corporation. Density 0.923 g/cm³, MFR 3.6 g/10 min.
- Polyethylene resin 2: Uz2020L manufactured by Prime Polymer Co., Ltd. Density 0.919 g/cm³, MFR 2.0 g/10 min. Linear polyethylene copolymer of ethylene and 1-hexene.
- Polyethylene resin 3: KF260T manufactured by Japan Polyethylene Corporation. Density 0.901 g/cm³, MFR 2.0 g/10 min. Linear polyethylene copolymer of ethylene and 1-hexene.
- Polyethylene resin 4: Uz1520L manufactured by Prime Polymer Co., Ltd. Density 0.914 g/cm³, MFR 2.3 g/10 min. Linear polyethylene copolymer of ethylene and 1-hexene.
- Polyethylene resin 5: KS340T manufactured by Japan Polyethylene Corporation. Density 0.880 g/cm³, MFR 3.5 g/10 min. Linear polyethylene copolymer of ethylene and 1-hexene.
- Polyethylene resin 6: Uz3520L manufactured by Prime Polymer Co., Ltd. Density 0.931 g/cm³, MFR 2.1 g/10 min. Linear polyethylene copolymer of ethylene and 1-hexene.
- Polyethylene resin 7: SP0510 manufactured by Prime Polymer Co., Ltd. Density 0.903 g/cm³, MFR 1.2 g/10 min. Linear polyethylene copolymer of ethylene and 1-hexene.

### [Polymer antistatic agents]

- AS agent 1: Ionomer antistatic agent, Entira SD100 manufactured by Dow-Mitsui Polychemicals. Density 0.985 g/cm³. MFR 5.5 g/10 min.
- AS agent 2: Antistatic agent, Pelestat 230 manufactured by Sanyo Chemical Industries, Ltd. Nonionic polymer antistatic agent.

### Polyether/polypropylene/polyamide copolymer.

- AS agent 3: Antistatic agent, Pelestat 201 manufactured by Sanyo Chemical Industries, Ltd. Nonionic polymer antistatic agent containing ion conductive material. Polyether/polypropylene/polyamide copolymer.
- AS agent 4: Antistatic agent, Capron P-70 manufactured by Nisshin Kagaku Kenkyusho Co., Ltd. Cationic polymer antistatic agent. Contains cationic ion conductive material.
- AS agent 5: Antistatic agent, Sankonol TBX-310 manufactured by Sanko Chemical Industry Co., Ltd. Anionic polymer antistatic agent. Contains anionic ion conductive material.

### [Anti-blocking agents]

- AB agent 1: Sumikathene E EMB-21, an AB agent manufactured by Sumitomo Chemical Co., Ltd. Density 0.960 g/cm³, MFR 4.0 g/10 min. Contains 10% by mass zeolite as anti-blocking agent component and about 90% by mass LLDPE.
- AB agent 2: UMERIT-27308M, an AB agent manufactured by Ube Maruzen Polyethylene. Density 0.970 g/cm³, MFR 4.0 g/10 min. Contains 30% by mass PMMA as anti-blocking agent component and about 70% by mass LLDPE.

### [Preparation of masterbatch]

The masterbatch used in a moisture absorption layer was prepared as follows.

### (Preparation of masterbatch 1)

Polyethylene resin 1 and metal oxide 1 were melt-blended in the following proportions to prepare masterbatch 1 (MB1).

| | |
|---|---|
| Polyethylene resin 1 | 40 parts by mass |
| Metal oxide 1 | 60 parts by mass |

### <<A: When there is no second resin layer>>

### [Example A1]

### (Preparation of resin composition for first resin layer)

Polyethylene resin 2 and AB agent 1 were dry-blended in the following proportions to prepare a resin composition for the first resin layer.

| | |
|---|---|
| Polyethylene resin 2 | 95 parts by mass |
| AB agent 1 | 5 parts by mass |

### (Preparation of resin composition for first moisture absorption layer)

Masterbatch 1 and polyethylene resin 2 were dry-blended in the following proportions to give a resin composition for the first moisture absorption layer.

| | |
|---|---|
| Masterbatch 1 | 67 parts by mass |
| Polyethylene resin 2 | 33 parts by mass |

### (Preparation of resin composition for second moisture absorption layer)

The following materials were dry-blended in the following proportions to give a resin composition for the second moisture absorption layer.

| | |
|---|---|
| Masterbatch 1 | 67 parts by mass |
| Polyethylene resin 2 | 26 parts by mass |
| AB agent 1 | 5 parts by mass |
| AB agent 2 | 2 parts by mass |

### (Production of hygroscopic film)

The resin composition for the first moisture absorption layer, the resin composition for the first moisture absorption layer, and the resin composition for the second moisture absorption layer obtained above were formed into a film and laminated by co-extrusion film formation to give a hygroscopic film (80 µm thick) having the following layer structure.
Layer structure: first resin layer/first moisture absorption layer/second moisture absorption layer = 20 µm thick/40 µm thick/20 µm thick

### (Production of hygroscopic laminate)

Using polyester film 1, polyester film 2, DL adhesive 1, aluminum foil 1, and the hygroscopic film obtained above, a hygroscopic laminate having the following layer structure was produced by dry lamination. Then, various evaluations were made.
Layer structure: gas barrier base layer [basal layer 1/adhesive layer/gas barrier layer/adhesive layer/basal layer 2]/adhesive layer/moisture-absorbing sealant layer [first resin layer/first moisture absorption layer/second moisture absorption layer] = gas barrier base layer [polyester film 1 (12 µm thick)/DL adhesive 1 (3.5 g/m²)/aluminum foil 1 (7 µm thick)/DL adhesive 1 (3.5 g/m²)/polyester film 2 (12 µm thick)]/DL adhesive 1 (3.5 g/m²)/moisture-absorbing sealant layer [first resin layer (20 µm thick)/first moisture absorption layer (40 µm thick)/second moisture absorption layer (20 µm thick)]

### [Examples A2 to A5, Comparative Examples A1 to A3]

A resin composition for the first resin layer, a resin composition for the first moisture absorption layer, and a resin composition for the second moisture absorption layer were prepared according to Table 1 in the same manner as Example A1, and a hygroscopic film and a hygroscopic laminate were produced and similarly evaluated.

### <<B: When there is second resin layer>>

### [Example B1]

### (Preparation of resin composition for first resin layer)

Polyethylene resin 3 and AB agent 1 were dry-blended in the following proportions to prepare a resin composition for the first resin layer.

| | |
|---|---|
| Polyethylene resin 3 | 95 parts by mass |
| AB agent 1 | 5 parts by mass |

### (Preparation of resin composition for moisture absorption layer)

Masterbatch 1 and polyethylene resin 3 were dry-blended in the following proportions to give a resin composition for the moisture absorption layer.

| | |
|---|---|
| Masterbatch 1 | 67 parts by mass |
| Polyethylene resin 3 | 33 parts by mass |

### (Preparation of resin composition for second resin layer)

The following materials were dry-blended in the following proportions to prepare a resin composition for the second resin layer.

| | |
|---|---|
| Polyethylene resin 3 | 78 parts by mass |
| AB agent 1 | 5 parts by mass |
| AB agent 2 | 2 parts by mass |
| AS agent 1 | 15 parts by mass |

### (Preparation of hygroscopic film)

The resin composition for the first moisture absorption layer, the resin composition for the moisture absorption layer, and the resin composition for the second resin layer obtained above were formed into a film and laminated by co-extrusion film formation to give a hygroscopic film (80 µm thick) having the following layer structure.
Layer structure: first resin layer/moisture absorption layer/second resin layer = 20 µm thick/40 µm thick/20 µm thick

### (Production of hygroscopic laminate)

Using antistatic polyester film 1, polyester film 2, DL adhesive 1, aluminum foil 1, and the hygroscopic film obtained above, a hygroscopic laminate having the following layer structure was produced by dry lamination. Then, various evaluations were made.
Layer structure: gas barrier base layer [basal layer 1/adhesive layer/gas barrier layer/adhesive layer/basal layer 2]/adhesive layer/moisture-absorbing sealant layer [first resin layer/moisture absorption layer/second resin layer] = gas barrier base layer [polyester film 1 (12 µm thick)/DL adhesive 1 (3.5 g/m²)/aluminum foil 1 (7 µm thick)/DL adhesive 1 (3.5 g/m²)/polyester film 2 (12 µm thick)]/DL adhesive 1 (3.5 g/m²)/moisture-absorbing sealant layer [first resin layer (20 µm thick)/moisture absorption layer (40 µm thick)/second resin layer (20 µm thick)]

### [Examples B2 to B5, Comparative Examples B1 to B4]

A resin composition for the first resin layer, a resin composition for the moisture absorption layer, and a resin composition for the second resin layer were prepared according to Table 2 in the same manner as Example B1, and a hygroscopic film and a hygroscopic laminate were produced and similarly evaluated.

### «C: In the case of low-elutability ions»

### [Example C1]

### (Preparation of resin composition for first resin layer)

Polyethylene resin 2 and AB agent 1 were dry-blended in the following proportions to prepare a resin composition for the first resin layer.

| | |
|---|---|
| Polyethylene resin 2 | 95 parts by mass |
| AB agent 1 | 5 parts by mass |

### (Preparation of resin composition for moisture absorption layer)

Masterbatch 1 and polyethylene resin 3 were dry-blended in the following proportions to give a resin composition for the moisture absorption layer.

| | |
|---|---|
| Masterbatch 1 | 67 parts by mass |
| Polyethylene resin 3 | 33 parts by mass |

### (Preparation of resin composition for second resin layer)

The following materials were dry-blended in the following proportions to prepare a resin composition for the second resin layer.

| | |
|---|---|
| Polyethylene resin 4 | 78 parts by mass |
| AB agent 1 | 5 parts by mass |
| AB agent 2 | 2 parts by mass |
| AS agent 3 | 15 parts by mass |

### (Preparation of hygroscopic film)

The resin composition for the first moisture absorption layer, the resin composition for the moisture absorption layer, and the resin composition for the second resin layer obtained above were formed into a film and laminated by co-extrusion film formation to give a hygroscopic film (80 µm thick) having the following layer structure.
Layer structure: first resin layer/moisture absorption layer/second resin layer = 30 µm thick/40 µm thick/10 µm thick

### (Production of hygroscopic laminate)

Using antistatic polyester film 1, polyester film 2, DL adhesive 1, aluminum foil 1, and the hygroscopic film obtained above, a hygroscopic laminate having the following layer structure was produced by dry lamination. Then, various evaluations were made.
Layer structure: gas barrier base layer [basal layer /adhesive layer/gas barrier layer]/adhesive layer/moisture-absorbing sealant layer [first resin layer/moisture absorption layer/second resin layer] = gas barrier base layer [polyester film 1 (12 µm thick)/DL adhesive 1 (3.5 g/m²)/aluminum foil 1 (7 µm thick)]/DL adhesive 1 (3.5 g/m²)/moisture-absorbing sealant layer [first resin layer (30 µm thick)/moisture absorption layer (40 µm thick)/second resin layer (10 µm thick)]

### [Examples C2 to C5, Comparative Example C1]

A resin composition for the first resin layer, a resin composition for the moisture absorption layer, and a resin composition for the second resin layer were prepared according to Table 3 in the same manner as Example C1, and a hygroscopic film and a hygroscopic laminate were produced and similarly evaluated.

### <Evaluation method>

### [Film formability]

The appearance of the hygroscopic laminate was observed and sensorily evaluated. The evaluation criteria are as follows:
Good (circle): Film formation is possible without wrinkles or protrusions.
Poor (cross mark): Numerous wrinkles and protrusions are formed, and film formation is difficult.

### [Amount of moisture absorbed in 24 hours and 48 hours]

The weight change of a 10 cm × 10 cm hygroscopic laminate in 24 hours and 48 hours in an environment of 23°C and 50% RH was measured, and the amount of moisture absorbed was calculated according to the following formula: Amount of moisture absorbed (g/m2) = [Weight after moisture absorption (g) - Initial dry weight (g)] / 0.01 (m2)

### [Largest amount of moisture absorbed]

A 10 cm × 10 cm hygroscopic film was placed in an aluminum laminate pouch, vacuum-packaged, and stored in an environment of 23°C for one week. The hygroscopic film was then removed and stored in an environment of 23°C and 50% RH for two weeks, and the maximum amount of moisture absorbed was measured based on the weight change. [Weight after storage (g) - Initial dry weight (g)] / 0.01 (m²) = Amount of moisture absorbed (g/m²).

### [Antistatic properties]

The intrinsic surface resistivity of the surface of the second resin layer was measured in an environment of 23°C and 50% RH with "Hiresta-UP" manufactured by Mitsubishi Chemical Corporation.

### [Content of elutable ions]

First, the resulting hygroscopic film was cut into a 10 cm × 20 cm piece and folded in half, three sides were heat-sealed to give a pouch, and the weight of the pouch was measured.

Then, 100 g of ultrapure water was introduced into the pouch prepared above, and extracted by being heated at 30°C for 20 minutes in one atmosphere, and then cooled to about 30°C to give an extract.

The concentrations of the following cations and anions in the extract were measured with an ion chromatography "ICS-6000" manufactured by Thermo Fisher Scientific, and the content of each cation and anion in the hygroscopic film was calculated.
Cationic species: Li⁺, Na⁺, NH₄⁺, K⁺, Mg²⁺, Ca²⁺
Anionic species: F-, Cl-, NO₂⁻, Br-, NO₃⁻, SO₄²⁻, PO₄³⁻
Symbols in the table have the following meanings: (Cation)
Good (circle): The total content of the above cationic species is 100 ppb or less.
Fair (triangle): The content of each of Na⁺ and K⁺ is 100 ppb or less, but the total content of the above cationic species is greater than 100 ppb.
Poor (cross mark): The content of at least one of Na⁺ and K⁺ is greater than 100 ppb.
   (Anion)
Good (circle): The total content of the above anionic species is 100 ppb or less.
Fair (triangle): The content of each of Cl⁻ and Br⁻ is 100 ppb or less, but the total content of the above anionic species is greater than 100 ppb.
Poor (cross mark): The content of at least one of Cl⁻ and Br- is greater than 100 ppb.

### [Electrical conductivity of extract]

The electrical conductivity of the extract obtained in the measurement of the content of elutable ions was measured with a conductivity sensor "1.5Tri 0.1C SS ISM" manufactured by Mettler Toledo.

Symbols in the table have the following meanings:
Good (circle): Electrical conductivity is 50 µS/m or less.
Poor (cross mark): Electrical conductivity is greater than 50 µS/m.

### [Heat seal strength]

The hygroscopic laminate was cut into 10 cm × 10 cm pieces, one piece was placed on top of another such that the moisture-absorbing sealant layers face each other, and a 1 cm × 10 cm area was heat-sealed with a heat seal tester (TP-701-A manufactured by Tester Sangyo Co., Ltd.) such that the edge was bifurcated not being heat-sealed.

The film was then cut into a strip having a width of 15 mm to produce a test piece for measuring heat seal strength.

Each bifurcated edge of the test piece was attached to a tensile tester and pulled so as to separate the heat-sealed portion and measure heat seal strength (N/15 mm width).

### (Heat seal conditions)

Temperature: 140°C in Examples A and B, and 180°C in Example C
Pressure: 1 kgf/cm²
Time: 1 sec

### (Tensile strength test conditions)

Test rate: 300 mm/min
Load range: 100 N in Examples A and B, and 50 N in Example C

### <Result Summary>

The hygroscopic laminates of all Examples of the present invention showed good film formability, moisture absorbability, and antistatic properties.

However, Comparative Examples A1 and A2, which did not contain a moisture absorbing agent, showed insufficient moisture absorbability, and Comparative Examples A3 and B1, which did not contain a sufficient amount of polyethylene resin having a density of 0.880 g/cm³ or more and 0.930 g/cm³ or less in the moisture absorption layer, showed insufficient heat sealability.

Comparative Examples B2, B3, and B4, which did not contain an antistatic agent in the second resin layer, showed poor antistatic properties.

In addition, Examples C1 to C5, in which the second resin layer contained a polymer antistatic agent and had a melt flow rate of 2.8 g/10 min or more and 10 g/10 min or less, showed a good balance between film formability, moisture absorbability, antistatic properties, and heat sealability, but Comparative Example C1, in which the second resin layer contained a polymer antistatic agent and had a melt flow rate of less than 2.8 g/10 min, showed poor heat sealability.

**[Table 4]**

| | Item | | | | | Unit | Example A | | | | | Comparative Example A | | |
|---|---|---|---|---|---|---|---|---|---|---|---|---|---|---|
| | | | | | | | 1 | 2 | 3 | 4 | 5 | 1 | 2 | 3 |
| | | Substrate layer 1 | | | Polyester film 1 | µm | 12 | 12 | 12 | 12 | 12 | 12 | 12 | 12 |
| | | Adhesive layer | | | DL adhesive 1 | g/m² | 3.5 | 3.5 | 3.5 | 3.5 | 3.5 | 3.5 | 3.5 | 3.5 |
| | | Metal foil layer | | | Aluminum foil 1 | µm | 7 | 7 | 7 | 7 | 7 | 7 | 7 | 7 |
| | | Adhesive layer | | | DL adhesive 1 | g/m² | 3.5 | 3.5 | 3.5 | 3.5 | 3.5 | 3.5 | 3.5 | 3.5 |
| | | Substrate layer 2 | | | Polyester film 2 | µm | 12 | 12 | 12 | 12 | 12 | 12 | 12 | 12 |
| | | Adhesive layer | | | DL adhesive 1 | g/m² | 3.5 | 3.5 | 3.5 | 3.5 | 3.5 | 3.5 | 3.5 | 3.5 |
| | Layer thickness | Moisture absorbing sealant layer | First resin layer | | See below for formulation and composition | µm | 20 | 20 | 20 | 20 | 20 | 20 | 20 | 20 |
| | | | Moisture absorption layer | First moisture absorption layer | See below for formulation and composition | µm | 40 | 40 | 40 | 40 | 40 | 40 | 40 | 40 |
| | | | | Second moisture absorption layer | See below for formulation and composition | µm | 20 | 20 | 20 | 20 | 20 | 20 | 20 | 20 |
| | | | First resin layer | | Polyethylene resin 2 | part by mass | 95 | | | | | 95 | | |
| | | | | | Polyethylene resin 3 | part by mass | | 95 | 95 | 95 | 95 | | 95 | |
| | | | | | Polyethylene resin 6 | part by mass | | | | | | | | 95 |
| | | | | | AB agent 1 | part by mass | 5 | 5 | 5 | 5 | 5 | 5 | 5 | 5 |
| | | | | First moisture absorption layer | Masterbatch 1 | part by mass | 67 | 67 | 67 | 67 | 67 | 67 | 67 | 67 |
| | | | | | Polyethylene resin 2 | part by mass | 33 | | | | | 33 | | |
| | | | | | Polyethylene resin 3 | part by mass | | 33 | | | | | 33 | |
| Hygroscopic laminate layer structure | Formulation | Moisture absorbing sealant layer | | | Polyethylene resin 4 | part by mass | | | 33 | | | | | |
| | | | | | Polyethylene resin 5 | part by mass | | | | 33 | 8 | | | |
| | | | | | Polyethylene resin 6 | part by mass | | | | | 25 | | | 33 |
| | | | Moisture absorption layer | Second moisture absorption layer | Masterbatch 1 | part by mass | 67 | 67 | 67 | 67 | 67 | | | 67 |
| | | | | | Polyethylene resin 2 | part by mass | 26 | | | | | 93 | | |
| | | | | | Polyethylene resin 3 | part by mass | | 26 | 26 | 26 | 6 | | 93 | |
| | | | | | Polyethylene resin 6 | part by mass | | | | | 20 | | | 26 |
| | | | | | AB agent 1 | part by mass | 5 | 5 | 5 | 5 | 5 | 5 | 5 | 5 |
| | | | | | AB agent 2 | part by mass | 2 | 2 | 2 | 2 | 2 | 2 | 2 | 2 |
| | Composition | Moisture absorbing sealant layer | First resin layer | | Polyethylene resin | part by mass | 99.5 | 99.5 | 99.5 | 99.5 | 99.5 | 99.5 | 99.5 | 99.5 |
| | | | | | Zeolite | part by mass | 0.5 | 0.5 | 0.5 | 0.5 | 0.5 | 0.5 | 0.5 | 0.5 |
| | | | Moisture absorption layer | First moisture absorption layer | Polyethylene resin with density of 0.880 to 0.930 g/cm³ | part by mass | 59.8 | 59.8 | 59.8 | 59.8 | 34.8 | 59.8 | 59.8 | 26.8 |
| | | | | | Moisture absorbing agent | part by mass | 40.2 | 40.2 | 40.2 | 40.2 | 40.2 | 40.2 | 40.2 | 40.2 |
| | | | | Second moisture absorption layer | Polyethylene resin with density of 0.880 to 0.930 g/cm³ | part by mass | 58.7 | 58.7 | 58.7 | 58.7 | 38.7 | 98.9 | 98.9 | 32.7 |
| | | | | | Other polyethylene resins | part by mass | 0.0 | 0.0 | 0.0 | 0.0 | 20.0 | 0.0 | 0.0 | 26.0 |
| | | | | | Moisture absorbing agent | part by mass | 40.2 | 40.2 | 40.2 | 40.2 | 40.2 | 0.0 | 0.0 | 40.2 |
| | | | | | Zeolite, PMMA | part by mass | 1.1 | 1.1 | 1.1 | 1.1 | 1.1 | 1.1 | 1.1 | 1.1 |
| Evaluation result | Amount of moisture absorbed | | | | 24 hours later | g/m² | 1.93 | 2.64 | 2.64 | 2.70 | 1.72 | 1.05 | 1.30 | 1.49 |
| | | | | | 48 hours later | g/m² | 4.53 | 4.56 | 4.50 | 4.70 | 4.06 | 2.07 | 2.65 | 3.33 |
| | | | | | Maximum amount of moisture absorbed | g/m² | 10.12 | 10.43 | 10.33 | 10.29 | 10.31 | 7.32 | 7.11 | 10.05 |
| | Intrinsic surface resistivity (surface of second resin layer) | | | | | Ω/□ | >10¹⁴ | >10¹⁴ | >10¹⁴ | >10¹⁴ | >10¹⁴ | >10¹⁴ | >10¹⁴ | >10¹⁴ |
| | Heat seal strength (140°C) | | | | | N/15 mm width | 59.8 | 55.6 | 57.8 | 52.3 | 33.2 | 72.8 | 69.5 | 1.5 |

**[Table 5]**

| | Item | | | | Unit | Example B | | | | | Comparative Example B 3 | | | |
|---|---|---|---|---|---|---|---|---|---|---|---|---|---|---|
| | | | | | | 1 | 2 | 3 | 4 | 5 | 1 | 2 | 3 | 4 |
| | | Substrate layer 1 | | Antistatic polyester film 1 | µm | 12 | 12 | 12 | 12 | 12 | 12 | 12 | | |
| | | | | Polyester film1 | µm | | | | | | | | 12 | |
| | | | | Polyamide film | µm | | | | | | | | | 15 |
| | | Adhesive layer | | DL adhesive 1 | g/m² | 3.5 | 3.5 | 3.5 | 3.5 | 3.5 | 3.5 | 3.5 | 3.5 | 3.5 |
| | | Metal foil layer | | Aluminum foil 1 | µm | 7 | 7 | 7 | 7 | 7 | 7 | 7 | 7 | 7 |
| | | Adhesive layer | | DL adhesive 1 | g/m² | 3.5 | 3.5 | 3.5 | 3.5 | 3.5 | 3.5 | 3.5 | 3.5 | 3.5 |
| | | Substrate layer 2 | | Polyester film2 | µm | 12 | 12 | 12 | 12 | 12 | 12 | 12 | 12 | 12 |
| | Layer thickn ess | Adhesive layer | | DL adhesive 1 | g/m² | 3.5 | 3.5 | 3.5 | 3.5 | 3.5 | 3.5 | 3.5 | 3.5 | 3.5 |
| | | Moisture absorbing sealant layer | First resin layer | See below for formulation and composition | µm | 20 | 20 | 20 | 30 | 30 | 20 | 20 | 20 | 20 |
| | | | Moisture absorption layer | See below for formulation and composition | µm | 40 | 40 | 40 | 40 | 40 | 40 | 40 | 40 | 40 |
| | | | Second resin laver | See below for formulation and composition | µm | 20 | 20 | 20 | 10 | 10 | 20 | 20 | 20 | 20 |
| | | | First resin layer | Polyethylene resin 2 | part by mass | 95 | | | 95 | | | 95 | 95 | 95 |
| | | | | Polyethylene resin 3 | part by mass | | | 95 | | | | | | |
| | | | | Polyethylene resin 4 | part by mass | | 95 | | | 95 | | | | |
| | | | | Polyethylene resin 6 | part by mass | | | | | | 95 | | | |
| | | | | AB agent 1 | part by mass | 5 | 5 | 5 | 5 | 5 | 5 | 5 | 5 | 5 |
| | | | Moisture absorption layer | Masterbatch 1 | part by mass | 67 | 67 | 67 | 67 | 67 | 67 | 67 | 67 | 67 |
| | | | | Polyethylene resin 2 | part by mass | 33 | | | 33 | | | 33 | 33 | 33 |
| Hygroscopic laminate layer structure | Formu lation | Moisture absorbing sealant layer | | Polyethylene resin 3 | part by mass | | | 33 | | | | | | |
| | | | | Polyethylene resin 4 | part by mass | | 33 | | | 33 | | | | |
| | | | | Polyethylene resin 6 | part by mass | | | | | | 33 | | | |
| | | | Second resin layer | Polyethylene resin 2 | part by mass | 78 | | | 78 | | | 93 | 93 | 93 |
| | | | | Polyethylene resin 3 | part by mass | | | 78 | | | | | | |
| | | | | Polyethylene resin 4 | part by mass | | 78 | | | 78 | | | | |
| | | | | Polyethylene resin 6 | part by mass | | | | | | 78 | | | |
| | | | | AB agent 1 | part by mass | 5 | 5 | 5 | 5 | 5 | 5 | 5 | 5 | 5 |
| | | | | AB agent 2 | part by mass | 2 | 2 | 2 | 2 | 2 | 2 | 2 | 2 | 2 |
| | | | | AS agent 1 | part by mass | 15 | 15 | 15 | 15 | 15 | 15 | | | |
| | Comp osition | Moisture absorbing sealant layer | First resin layer | Polyethylene resin | part by mass | 99.5 | 99.5 | 99.5 | 99.5 | 99.5 | 99.5 | 99.5 | 99.5 | 99.5 |
| | | | | Zeolite | part by mass | 0.5 | 0.5 | 0.5 | 0.5 | 0.5 | 0.5 | 0.5 | 0.5 | 0.5 |
| | | | Moisture absorption layer | Polyethylene resin with density of 0.880 to 0.930g/cm³ | part by mass | 59.8 | 59.8 | 59.8 | 59.8 | 59.8 | 26.8 | 59.8 | 59.8 | 59.8 |
| | | | | Moisture absorbing agent | part by mass | 40.2 | 40.2 | 40.2 | 40.2 | 40.2 | 40.2 | 40.2 | 40.2 | 40.2 |
| | | | Second resin layer | Polyethylene resin with density of 0.880 to 0.930g/cm³ | part by mass | 83.9 | 83.9 | 83.9 | 83.9 | 83.9 | 5.9 | 98.9 | 98.9 | 98.9 |
| | | | | Other polyethylene resins | part by mass | 0.0 | 0.0 | 0.0 | 0.0 | 0.0 | 78.0 | 0.0 | 0.0 | 0.0 |
| | | | | Zeolite, PMMA | part by mass | 1.1 | 1.1 | 1.1 | 1.1 | 1.1 | 1.1 | 1.1 | 1.1 | 1.1 |
| | | | | Polymer antistatic agent | part by mass | 15.0 | 15.0 | 15.0 | 15.0 | 15.0 | 15.0 | 0.0 | 0.0 | 0.0 |
| Evaluation result | Amount of moisture absorbed | | | 24 hours later | g/m² | 1.05 | 1.30 | 1.31 | 1.36 | 1.33 | 0.91 | 0.89 | 0.91 | 0.92 |
| | | | | 48 hours later | g/m² | 2.07 | 2.65 | 2.80 | 2.97 | 2.82 | 1.86 | 1.82 | 1.82 | 1.86 |
| | | | | Maximum amount of moisture absorbed | g/m² | 7.20 | 7.15 | 7.16 | 7.08 | 7.22 | 7.14 | 7.10 | 7.22 | 7.32 |
| | Intrinsic surface resistivity (surface of second resin layer) | | | | Ω/□ | 3×10¹⁰ | 4×10¹⁶ | 3×10¹⁶ | 2×10¹⁶ | 3×10¹⁰ | 3×10¹⁰ | >10¹⁴ | >10¹⁴ | >10¹⁴ |
| | Heat seal strength (140°C) | | | | N/15 mm width | 72.8 | 69.5 | 80.1 | 70.5 | 66.5 | 1.1 | 71.5 | 71.5 | 71.5 |

**[Table 6]**

| | Item | | | | Unit | Example C | | | | | Comparative Example C |
|---|---|---|---|---|---|---|---|---|---|---|---|
| | | | | | | 1 | 2 | 3 | 4 | 5 | 1 |
| | | Substrate layer | | Polyester film1 | µm | 12 | 12 | 12 | 12 | 12 | 12 |
| | | Adhesive layer | | DL adhesive 1 | g/m² | 3.5 | 3.5 | 3.5 | 3.5 | 3.5 | 3.5 |
| | | Metal foil laver | | Aluminum foil 1 | µm | 7 | 7 | 7 | 7 | 7 | 7 |
| | | Adhesive layer | | DL adhesive 1 | g/m² | 3.5 | 3.5 | 3.5 | 3.5 | 3.5 | 3.5 |
| | Layer thickness | Moisture absorbing sealant layer | First resin layer | See below for formulation and composition | µm | 30 | 30 | 30 | 30 | 30 | 30 |
| | | | Moisture absorption layer | See below for formulation and composition | µm | 40 | 40 | 40 | 40 | 40 | 40 |
| | | | Second resin layer | See below for formulation and composition | µm | 10 | 10 | 10 | 10 | 10 | 10 |
| | | | First resin layer | Polyethylene resin 2 | part by mass | 95 | 95 | 95 | 95 | 95 | 95 |
| | | | | AB agent 1 | part by mass | 5 | 5 | 5 | 5 | 5 | 5 |
| | | | Moisture absorption layer | Masterbatch 1 | part by mass | 67 | 67 | 67 | 67 | 67 | 67 |
| | | | | Polyethylene resin 3 | part by mass | 33 | 33 | 33 | 33 | 33 | 33 |
| | | | | AS agent 2 | part by mass | | 15 | 15 | | | |
| Hygroscopic laminate layer structure | Formulati on | Moisture absorbing sealant layer | Second resin layer | Polyethylene resin 4 | part by mass | 78 | 78 | 78 | 78 | 78 | |
| | | | | Polyethylene resin 7 | part by mass | | | | | | 78 |
| | | | | AB agent 1 | part by mass | 5 | 5 | 5 | 5 | 5 | 5 |
| | | | | AB agent 2 | part by mass | 2 | 2 | 2 | 2 | 2 | 2 |
| | | | | AS agent 1 | part by mass | | | 15 | | | |
| | | | | AS agent 3 | part by mass | 15 | 15 | | | | 15 |
| | | | | AS agent 4 | part by mass | | | | 15 | | |
| | | | | AS agent 5 | part by mass | | | | | 15 | |
| | | | First resin layer | AS agent 5 Polyethylene resin | part by mass | 99.5 | 99.5 | 99.5 | 99.5 | 99.5 | 99.5 |
| | | | | Zeolite | part by mass | 0.5 | 0.5 | 0.5 | 0.5 | 0.5 | 0.5 |
| | | | Moisture absorption layer | Polyethylene resin with density of 0.880 to 0.930 g/cm³ | part by mass | 59.8 | 59.8 | 59.8 | 59.8 | 59.8 | 59.8 |
| | Composit ion | Moisture absorbing sealant layer | | Polymer antistatic agent | part by mass | 0.0 | 15.0 | 15.0 | 0.0 | 0.0 | 0.0 |
| | | | | Moisture absorbing agent | part by mass | 40.2 | 40.2 | 40.2 | 40.2 | 40.2 | 40.2 |
| | | | Second resin layer | Polyethylene resin with density of 0.880 to 0.930 g/cm³ | part by mass | 83.9 | 83.9 | 83.9 | 83.9 | 83.9 | 83.9 |
| | | | | Polyethylene resin with MFR of 2.0 g/10 min or more | part by mass | 83.9 | 83.9 | 83.9 | 83.9 | 83.9 | 5.9 |
| | | | | Zeolite, PMMA | part by mass | 1.1 | 1.1 | 1.1 | 1.1 | 1.1 | 1.1 |
| | | | | Polymer antistatic agent | part by mass | 15.0 | 15.0 | 15.0 | 15.0 | 15.0 | 15.0 |
| | | | | MFR of second resin layer | g/10 min | 3.6 | 3.6 | 2.9 | 3.4 | 3.3 | 2.7 |
| Evaluation result | Amount of moisture absorbed | | | 24 hours later | g/m² | 1.35 | 1.46 | 126 | 1.25 | 1.28 | 1.23 |
| | | | | 48 hours later | g/m² | 2.65 | 3.05 | 2.45 | 2.61 | 2.60 | 2.48 |
| | | | | Maximum amount of moisture absorbed | g/m² | 8.20 | 9.30 | 7.23 | 7.55 | 7.75 | 6.10 |
| | Intrinsic surface resistivity (surface of second resin laver) | | | | Ω/□ | 1×10¹² | 1×10¹¹ | 1×10¹² | 1×10¹² | 1×10¹² | 1×10¹¹ |
| | Content of elutable ion | | | Cation | - | ○ | ○ | ○ | ○ | Δ | ○ |
| | | | | Anion | - | ○ | ○ | × | Δ | ○ | ○ |
| | Electrical conductivity of liquid extract | | | | - | ○ | ○ | × | × | × | ○ |
| | Heat seal strength (180°C) | | | | N/15 mm width | 61 | 49 | 50 | 59 | 55 | 38 |

### Reference Signs List

- 1: Hygroscopic film
- 2: First resin layer
- 3: Moisture absorption layer
- 3a: First moisture absorption layer
- 3b: Second moisture absorption layer
- 4: Second resin layer
- 5: Hygroscopic laminate
- 6: Gas barrier base layer
- 7: Moisture-absorbing sealant layer
- 8: Basal layer
- 9: Gas barrier layer
- 10: First resin layer
- 11: Moisture absorption layer
- 11a: First moisture absorption layer
- 11b: Second moisture absorption layer
- 12: Second resin layer
- 13: Adhesive layer

## Claims

1. A hygroscopic film comprising at least a resin layer and a moisture absorption layer in a laminated manner, wherein
the resin layer comprises a polyethylene resin,
the moisture absorption layer comprises a moisture absorbing agent and a polyethylene resin having a density of 0.880 g/cm³ or more and 0.930 g/cm³ or less,
the polyethylene resin contained in the resin layer and the polyethylene resin contained in the moisture absorption layer are the same or different,
a content of the polyethylene resin in the moisture absorption layer is 30% by mass or more and 90% by mass or less, and
a content of the moisture absorbing agent in the moisture absorption layer is 10% by mass or more and 60% by mass or less.

2. The hygroscopic film according to claim 1, wherein the polyethylene resin contained in the resin layer and the polyethylene resin contained in the moisture absorption layer are the same or different linear polyethylene copolymers of ethylene and α-olefin.

3. The hygroscopic film according to claim 1 or 2, wherein
the moisture absorbing agent comprises metal oxide, and
the metal oxide is one or more selected from the group consisting of calcium oxide, magnesium oxide, and hydrophilic zeolite.

4. The hygroscopic film according to any one of claims 1 to 3, wherein the moisture absorption layer comprises a first moisture absorption layer and a second moisture absorption layer.

5. The hygroscopic film according to any one of claims 1 to 4, further comprising a second resin layer, and comprising in a laminated manner the resin layer, the moisture absorption layer, and the second resin layer in this order, wherein
the second resin layer comprises a polyethylene resin having a density of 0.880 g/cm³ or more and 0.930 g/cm³ or less,
the polyethylene resin contained in the resin layer, the polyethylene resin contained in the moisture absorption layer, and the polyethylene resin contained in the second resin layer are the same or different, and
a content of the polyethylene resin in the second resin layer is 60% by mass or more and 95% by mass or less.

6. The hygroscopic film according to claim 5, wherein
the second resin layer further comprises a polymer antistatic agent, and
a resin composition constituting the second resin layer has a melt flow rate of 2.8 g/10 min or more and 10 g/10 min or less.

7. The hygroscopic film according to claim 5 or 6, wherein the moisture absorption layer further comprises a polymer antistatic agent.

8. The hygroscopic film according to any one of claims 5 to 7, wherein the polymer antistatic agent comprises:
an ionomer comprising an ethylene-unsaturated carboxylic acid copolymer, and
an aliphatic polyhydric alcohol having three or more hydroxyl groups within a molecule.

9. The hygroscopic film according to any one of claims 5 to 7, wherein the polymer antistatic agent has a main skeleton comprising a polyether skeleton, a polypropylene skeleton, and a polyamide skeleton.

10. The hygroscopic film according to any one of claims 5 to 9, wherein
a molded article composed solely of the polymer antistatic agent has an intrinsic surface resistivity of 1×10⁸ to 1×10¹² Ω/□; and
when 100 g of ultrapure water is introduced into a pouch produced by folding a 10 cm × 20 cm piece of the hygroscopic film in half and heat-sealing three sides, then extraction treatment is carried out in one atmosphere at 30°C for 20 minutes to give an extract, and the extract is analyzed for ionic impurities:
a total content of Li⁺, Na⁺, K⁺, Mg²⁺, and Ca²⁺ in the hygroscopic film is 100 ppb or less, and
a total content of F⁻, Cl⁻, NO₂⁻, Br⁻, NO₃⁻, SO₄²⁻, and PO₄²⁻ in the hygroscopic film is 100 ppb or less.

11. The hygroscopic film according to any one of claims 5 to 10, wherein the polyethylene resin contained in the resin layer and the polyethylene resin contained in the moisture absorption layer are the same or different linear polyethylene copolymers of ethylene and α-olefin.

12. The hygroscopic film according to any one of claims 5 to 11, wherein
the second resin layer has a thickness of 5 µm or more and 20 µm or less, and
a proportion of the thickness of the second resin layer to the total thickness of the hygroscopic film is 5% or more and 50% or less.

13. A hygroscopic packaging material, which is produced from the hygroscopic film according to any one of claims 1 to 12.

14. A hygroscopic laminate comprising at least a gas barrier base layer and a moisture-absorbing sealant layer, wherein
the gas barrier base layer comprises at least a basal layer and a gas barrier layer,
the basal layer comprises a resin film,
the gas barrier layer comprises a foil comprising an inorganic compound or a vapor-deposited film comprising an inorganic compound,
the moisture-absorbing sealant layer comprises a resin layer and a moisture absorption layer,
the resin layer comprises a polyethylene resin,
the moisture absorption layer comprises a moisture absorbing agent and a polyethylene resin having a density of 0.880 g/cm³ or more and 0.930 g/cm³ or less,
the polyethylene resin contained in the resin layer and the polyethylene resin contained in the moisture absorption layer are the same or different,
a content of the polyethylene resin in the moisture absorption layer is 30% by mass or more and 90% by mass or less, and
a content of the moisture absorbing agent in the moisture absorption layer is 10% by mass or more and 60% by mass or less.

15. The hygroscopic laminate according to claim 14, wherein the basal layer comprises a polyester film.

16. The hygroscopic laminate according to claim 14 or 15, wherein the basal layer comprising an antistatic polyester film is disposed on a surface of the hygroscopic laminate.

17. The hygroscopic laminate according to any one of claims 14 to 16, wherein the moisture-absorbing sealant layer is a layer comprising a hygroscopic film.

18. The hygroscopic laminate according to any one of claims 14 to 17, wherein the polyethylene resin contained in the resin layer and the polyethylene resin contained in the moisture absorption layer are the same or different linear polyethylene copolymers of ethylene and α-olefin.

19. The hygroscopic laminate according to any one of claims 14 to 18, wherein
the moisture absorbing agent comprises metal oxide, and
the metal oxide is one or more selected from the group consisting of calcium oxide, magnesium oxide, and hydrophilic zeolite.

20. The hygroscopic laminate according to any one of claims 14 to 19, wherein the moisture absorption layer comprises a first moisture absorption layer and a second moisture absorption layer.

21. The hygroscopic laminate according to any one of claims 14 to 20, further comprising a second resin layer, and comprising in a laminated manner the resin layer, the moisture absorption layer, and the second resin layer in this order, wherein
the second resin layer comprises a polyethylene resin having a density of 0.880 g/cm³ or more and 0.930 g/cm³ or less,
the polyethylene resin contained in the resin layer, the polyethylene resin contained in the moisture absorption layer, and the polyethylene resin contained in the second resin layer are the same or different, and
a content of the polyethylene resin in the second resin layer is 60% by mass or more and 95% by mass or less.

22. The hygroscopic laminate according to claim 21, wherein
the second resin layer further comprises a polymer antistatic agent, and
a resin composition constituting the second resin layer has a melt flow rate of 2.8 g/10 min or more and 10 g/10 min or less.

23. The hygroscopic laminate according to claim 21 or 22, wherein the moisture absorption layer further comprises a polymer antistatic agent.

24. The hygroscopic laminate according to any one of claims 21 to 23, wherein the polymer antistatic agent comprises:
an ionomer comprising an ethylene-unsaturated carboxylic acid copolymer, and
an aliphatic polyhydric alcohol having three or more hydroxyl groups within a molecule.

25. The hygroscopic laminate according to any one of claims 21 to 23, wherein the polymer antistatic agent has a main skeleton comprising a polyether skeleton, a polypropylene skeleton, and a polyamide skeleton.

26. The hygroscopic laminate according to any one of claims 21 to 25, wherein
a molded article composed solely of the polymer antistatic agent has an intrinsic surface resistivity of 1×10⁸ to 1×10¹² Ω/□; and
when 100 g of ultrapure water is introduced into a pouch produced by folding a 10 cm × 20 cm piece of the hygroscopic film in half and heat-sealing three sides, then extraction treatment is carried out in one atmosphere at 30°C for 20 minutes to give an extract, and the extract is analyzed for ionic impurities:
a total content of Li⁺, Na⁺, K⁺, Mg²⁺, and Ca²⁺ in the hygroscopic film is 100 ppb or less, and
a total content of F⁻, Cl⁻, NO₂⁻, Br⁻, NO₃⁻, SO₄²⁻, and PO₄²⁻ in the hygroscopic film is 100 ppb or less.

27. The hygroscopic laminate according to any one of claims 21 to 26, wherein the polyethylene resin contained in the resin layer and the polyethylene resin contained in the moisture absorption layer are the same or different linear polyethylene copolymers of ethylene and α-olefin.

28. The hygroscopic laminate according to any one of claims 21 to 27, wherein
the second resin layer has a thickness of 5 µm or more and 20 µm or less, and
a proportion of the thickness of the second resin layer to the total thickness of the moisture-absorbing sealant layer is 5% or more and 50% or less.

29. A hygroscopic packaging material, which is produced from the hygroscopic laminate according to any one of claims 14 to 28.

30. A hygroscopic package, which is produced from the hygroscopic packaging material according to claim 29.
